# EUROPEAN PATENT APPLICATION

(11) **EP 4 761 348 A1**
(43) Date of publication of application: **17.06.2026**
(21) Application number: 24852346.6
(22) Date of filing: 07.08.2024
(51) Int. Cl.: H04W 28/14, H04W 28/06, H04L 47/62, H04W 4/40

(54) **METHOD FOR TRANSMITTING MESSAGE IN WIRELESS COMMUNICATION SYSTEM AND APPARATUS THEREFOR**

(30) Priority: 07.08.2023 KR 20230103009
(71) Applicant: LG Electronics Inc., Yeongdeungpo-gu Seoul 07336 (KR)
(72) Inventor: PARK, Jonghwan, Seoul 06772 (KR); SEO, Hanbyul, Seoul 06772 (KR); BYUN, Jaihyun, Seoul 06772 (KR)
(74) Representative: Mooser, Sebastian Thomas
(86) International application number: PCT/KR2024/011736
(87) International publication number: WO 2025/033993

(57) **Abstract**

Disclosed are a method by which a first device transmits a message including object information in a wireless communication system and an apparatus therefor, according to various embodiments. Disclosed are the method and the apparatus therefor, the method comprising the steps of: acquiring sensing data for detecting a plurality of objects; buffering, in a buffer, object information detected from the sensing data; and transmitting, to a second device through a first session, a first segment message including partial object information regarding at least one object buffered in the buffer for a first threshold time from among the plurality of objects.

## Description

### TECHNICAL FIELD

The present disclosure relates to a method for transmitting a message including object information detected through sensing data by an apparatus in a wireless communication system and an apparatus therefor.

### BACKGROUND

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi carrier frequency division multiple access (MC-FDMA) system.

A sidelink (SL) refers to a communication method in which a direct link is established between user equipment (UE), and voice or data is directly exchanged between terminals without going through a base station (BS). SL is being considered as one way to solve the burden of the base station due to the rapidly increasing data traffic.

V2X (vehicle-to-everything) refers to a communication technology that exchanges information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR). Even in NR, vehicle-to-everything (V2X) communication may be supported.

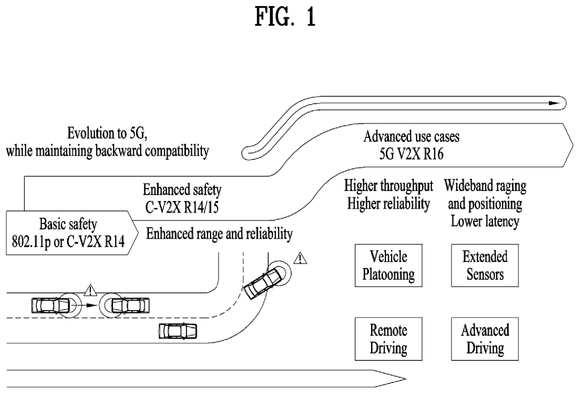

FIG. 1 is a diagram comparing RAT-based V2X communication before NR with NR-based V2X communication.

Regarding V2X communication, in RAT prior to NR, a scheme for providing a safety service based on V2X messages such as a basic safety message (BSM), a cooperative awareness message (CAM), and a decentralized environmental notification message (DENM) was mainly discussed. The V2X message may include location information, dynamic information, and attribute information. For example, the UE may transmit a periodic message type CAM and/or an event triggered message type DENM to another UE.

For example, the CAM may include dynamic state information about a vehicle such as direction and speed, vehicle static data such as dimensions, and basic vehicle information such as external lighting conditions and route details. For example, a UE may broadcast the CAM, and the CAM latency may be less than 100 ms. For example, when an unexpected situation such as a breakdown of the vehicle or an accident occurs, the UE may generate a DENM and transmit the same to another UE. For example, all vehicles within the transmission coverage of the UE may receive the CAM and/or DENM. In this case, the DENM may have a higher priority than the CAM.

Regarding V2X communication, various V2X scenarios have been subsequently introduced in NR. For example, the various V2X scenarios may include vehicle platooning, advanced driving, extended sensors, and remote driving.

For example, based on vehicle platooning, vehicles may dynamically form a group and move together. For example, to perform platoon operations based on vehicle platooning, vehicles belonging to the group may receive periodic data from a leading vehicle. For example, the vehicles belonging to the group may reduce or increase the distance between the vehicles based on the periodic data.

For example, based on advanced driving, a vehicle may be semi-automated or fully automated. For example, each vehicle may adjust trajectories or maneuvers based on data acquired from local sensors of nearby vehicles and/or nearby logical entities. Also, for example, each vehicle may share driving intention with nearby vehicles.

For example, on the basis of extended sensors, raw data or processed data acquired through local sensors, or live video data may be exchanged between a vehicle, a logical entity, UEs of pedestrians and/or a V2X application server. Thus, for example, the vehicle may recognize an environment that is improved over an environment that may be detected using its own sensor.

For example, for a person who cannot drive or a remote vehicle located in a dangerous environment, a remote driver or V2X application may operate or control the remote vehicle based on remote driving. For example, when a route is predictable as in the case of public transportation, cloud computing-based driving may be used to operate or control the remote vehicle. For example, access to a cloud-based back-end service platform may be considered for remote driving.

A method to specify service requirements for various V2X scenarios such as vehicle platooning, advanced driving, extended sensors, and remote driving is being discussed in the NR-based V2X communication field.

### DISCLOSURE

### TECHNICAL PROBLEM

An objective of the present disclosure is to provide a method of transmitting and receiving data and messages more accurately and efficiently.

It will be appreciated by persons skilled in the art that the objects that could be achieved with the various embodiments of the present disclosure are not limited to what has been particularly described hereinabove and the above and other objects that the various embodiments of the present disclosure could achieve will be more clearly understood from the following detailed description.

### TECHNICAL SOLUTION

In an aspect of the present disclosure, provided herein is a method of transmitting, by a first device, a message including object information in a wireless communication system. The method includes: acquiring sensing data for detecting a plurality of objects; buffering object information detected from the sensing data in a buffer; and transmitting a first segment message including partial object information for at least one object buffered in the buffer during a first threshold time among the plurality of objects to a second device through a first session. The first threshold time may be determined based on a round trip time (RTT) associated with the first session.

Alternatively, the first threshold time may be determined as an average value of the RTT associated with the first session.

Alternatively, the first device may provide, to the second device, the object information for the plurality of objects through the first segment message to an N-th segment message that are sequentially transmitted based on a buffering time.

Alternatively, the first segment message to the N-th segment message may be segments of a single sensor data sharing message (SDSM).

Alternatively, static data defined for the SDSM may be included only in the first segment message that is transmitted first among the first segment message to the N-th segment message.

Alternatively, a value of DetectedObjectCount of the static data may be set to an arbitrary value or a maximum value, regardless of a number of the plurality of objects.

Alternatively, the first segment message may further include at least one of a start code, a linkage code, or an end code.

Alternatively, the first threshold time may be determined by further considering an object detection time at which the object information detected from the sensing data is generated.

In another aspect of the present disclosure, provided herein is a first device configured to perform the above-described method of transmitting a message including object information.

In another aspect of the present disclosure, provided herein is a processing apparatus configured to control a first device performing the above-described method of transmitting a message including object information.

In another aspect of the present disclosure, provided herein is a method of receiving, by a second device, a message including object information in a wireless communication system. The method includes: sequentially receiving a first segment message to an N-th segment message including partial object information from a first device through a first session; and acquiring a sensor data sharing message (SDSM) by combining the first segment message to the N-th segment message. The partial object information may be object information for at least one object buffered in a buffer of the first device during a first threshold time, from object information for a plurality of objects included in the SDSM. The first threshold time may be determined based on a round trip time (RTT) associated with the first session.

In another aspect of the present disclosure, provided herein is a non-transitory computer-readable storage medium having recorded thereon instructions for performing the above-described method of receiving a message including object information.

In another aspect of the present disclosure, provided herein is a second device configured to perform the above-described method of receiving a message including object information.

In a further aspect of the present disclosure, provided herein is a processing apparatus configured to control a second device configured performing the above-described method of receiving a message including object information.

### ADVANTAGEOUS EFFECTS

According to various embodiments, data and messages may be transmitted and received more accurately and efficiently in a wireless communication system.

Effects to be achieved by embodiment(s) are not limited to what has been particularly described hereinabove and other effects not mentioned herein will be more clearly understood by persons skilled in the art to which embodiment(s) pertain from the following detailed description.

### BRIEF DESCRIPTION OF THE DRAWINGS

The accompanying drawings, which are included to provide a further understanding of the present disclosure and are incorporated in and constitute a part of this application, illustrate embodiments of the present disclosure and together with the description serve to explain the principle of the present disclosure.
FIG. 1 is a diagram for explaining by comparing V2X communication based on RAT before NR and V2X communication based on NR.
FIG. 2 illustrates the structure of an LTE system to which embodiment(s) are applicable.
FIG. 3 illustrates the structure of an NR system to which embodiment(s) are applicable.
FIG. 4 illustrates the structure of an NR radio frame to which embodiment(s) are applicable.
FIG. 5 illustrates the slot structure of an NR frame to which embodiment(s) are applicable.
FIG. 6 shows a communication structure providable in a 6G system, based on an embodiment of the present disclosure.
FIG. 7 shows an electromagnetic spectrum, based on an embodiment of the present disclosure.
FIG. 8 shows an example of an NTN typical scenario based on a transparent payload, based on an embodiment of the present disclosure.
FIG. 9 shows an example of an NTN typical scenario based on a regenerative payload, based on an embodiment of the present disclosure.
FIG. 10 shows an example of a sensing operation, based on an embodiment of the present disclosure.
FIG. 11 illustrates a radio protocol architecture for SL communication.
FIG. 12 illustrates UEs performing V2X or SL communication.
FIG. 13 illustrates resource units for V2X or SL communication.
FIG. 14 shows an example of a BWP, based on an embodiment of the present disclosure.
FIG. 15 shows a procedure of performing V2X or SL communication by a UE based on a resource allocation mode, based on an embodiment of the present disclosure.
FIG. 16 is a diagram for explaining an architecture of a V2N interface.
FIG. 17 is a diagram for explaining interfaces related to a connection structure between two servers providing a SoftV2X service.
FIG. 18 is a diagram for explaining data processing of a bridge.
FIG. 19 is a diagram for explaining a buffer model for V2X communication.
FIGS. 20 to 22 are diagrams for explaining a method of transmitting queued data based on a proposed buffer model.
FIG. 23 is a diagram for explaining a method of streaming a message based on a proposed buffer model.
FIG. 24 is a diagram for explaining a method in which a first device transmits a message including object information.
FIG. 25 is a diagram for explaining a method in which a second device receives a message including object information from a first device.
FIG. 26 illustrates a communication system applied to the present disclosure.
FIG. 27 illustrates wireless devices applicable to the present disclosure.
FIG. 28 illustrates another example of a wireless device to which the present disclosure is applied.
FIG. 29 illustrates a vehicle or an autonomous driving vehicle applied to the present disclosure.

### DETAILED DESCRIPTION

The wireless communication system is a multiple access system that supports communication with multiple users by sharing available system resources (e.g., bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, a single carrier frequency (SC-FDMA) system, a multi carrier frequency division multiple access (MC-FDMA) system, and the like.

A sidelink refers to a communication scheme in which a direct link is established between user equipments (UEs) to directly exchange voice or data between UEs without assistance from a base station (BS). The sidelink is being considered as one way to address the burden on the BS caused by rapidly increasing data traffic.

Vehicle-to-everything (V2X) refers to a communication technology for exchanging information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive MTC, and Ultra-Reliable and Low Latency Communication (URLLC) may be referred to as new radio access technology (RAT) or new radio (NR). Even in NR, V2X communication may be supported.

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE. 3GPP NR (New Radio or New Radio Access Technology) is an evolved version of 3GPP LTE/LTE-A/LTE-A pro.

5G NR is a successor technology of LTE-A and is a new clean-slate mobile communication system with characteristics such as high performance, low latency, and high availability. 5G NR may utilize all available spectrum resources, from low frequency bands below 1 GHz to intermediate frequency bands from 1 GHz to 10 GHz and high frequency (millimeter wave) bands above 24 GHz.

For clarity of explanation, LTE-A or 5G NR is mainly described, but the technical spirit of the embodiment(s) is not limited thereto

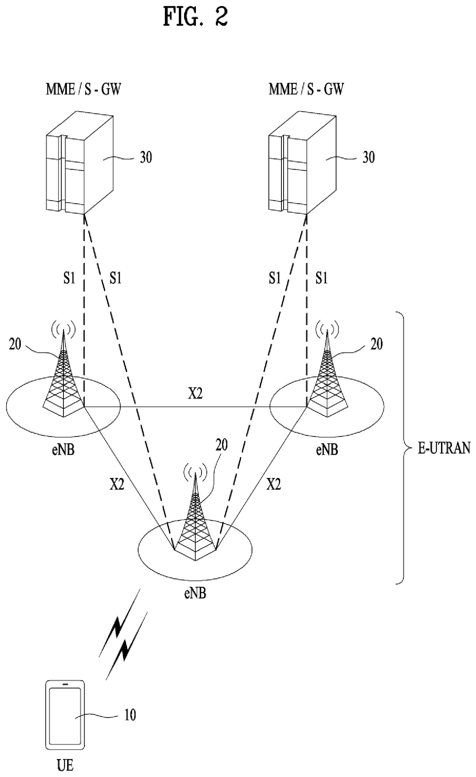

FIG. 2 illustrates the structure of an LTE system to which the present disclosure is applicable. This may also be called an evolved UMTS terrestrial radio access network (E-UTRAN) or LTE/LTE-A system.

Referring to FIG. 2, the E-UTRAN includes evolved Node BS (eNBs) 20 which provide a control plane and a user plane to UEs 10. A UE 10 may be fixed or mobile, and may also be referred to as a mobile station (MS), user terminal (UT), subscriber station (SS), mobile terminal (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S1 interface. More specifically, the eNB 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2), and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

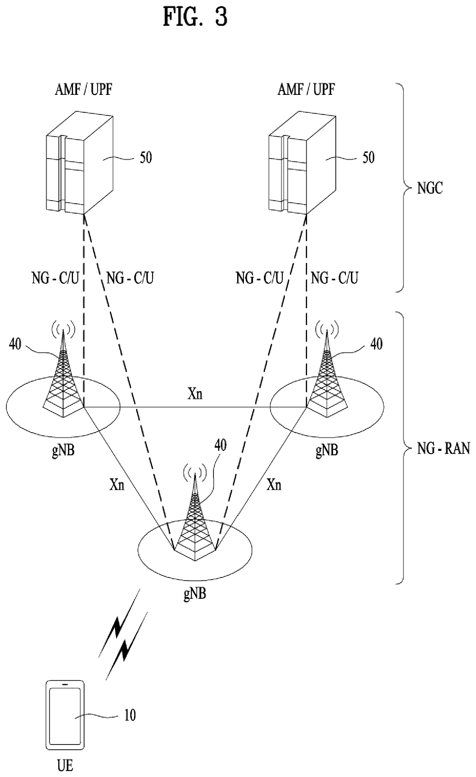

FIG. 3 illustrates the structure of a NR system to which the present disclosure is applicable.

Referring to FIG. 3, a next generation radio access network (NG-RAN) may include a next generation Node B (gNB) and/or an eNB, which provides user-plane and control-plane protocol termination to a UE. In FIG. 3, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

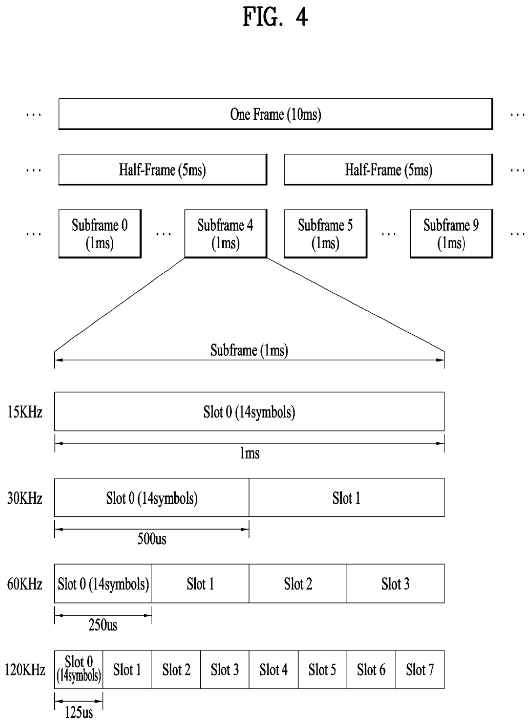

FIG. 4 illustrates the structure of a NR radio frame to which the present disclosure is applicable.

Referring to FIG. 4, a radio frame may be used for UL transmission and DL transmission in NR. A radio frame is 10 ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot N^{slot}_{symb}, the number of slots per frame N^{frame,u}ₛₗₒₜ, and the number of slots per subframe N^{subframe,u}ₛₗₒₜ according to an SCS configuration µ in the NCP case.

**[Table 1]**

| SCS (15*2u) | N^{slot}_{symb} | N^{frame,u}ₛₗₒₜ | N^{subframe,u}ₛₗₒₜ |
|---|---|---|---|
| 15 kHz (u=0) | 14 | 10 | 1 |
| 30 kHz (u=1) | 14 | 20 | 2 |
| 60 kHz (u=2) | 14 | 40 | 4 |
| 120 kHz (u=3) | 14 | 80 | 8 |
| 240 kHz (u=4) | 14 | 160 | 16 |

Table 2 below lists the number of symbols per slot, the number of slots per frame, and the number of slots per subframe according to an SCS in the ECP case.

**[Table 2]**

| SCS (15*2^u) | N^{slot}_{symb} | N^{frame,u}ₛₗₒₜ | N^{subframe,u}ₛₗₒₜ |
|---|---|---|---|
| 60 kHz (u=2) | 12 | 40 | 4 |

In the NR system, different OFDM(A) numerologies (e.g., SCSs, CP lengths, etc.) may be configured for a plurality of cells aggregated for one UE. Thus, the (absolute) duration of a time resource (e.g., SF, slot, or TTI) including the same number of symbols may differ between the aggregated cells (such a time resource is commonly referred to as a time unit (TU) for convenience of description).

In NR, multiple numerologies or SCSs to support various 5G services may be supported. For example, a wide area in conventional cellular bands may be supported when the SCS is 15 kHz, and a dense urban environment, lower latency, and a wider carrier bandwidth may be supported when the SCS is 30 kHz/60 kHz. When the SCS is 60 kHz or higher, a bandwidth wider than 24.25 GHz may be supported to overcome phase noise.

The NR frequency band may be defined as two types of frequency ranges. The two types of frequency ranges may be FR1 and FR2. The numerical values of the frequency ranges may be changed. For example, the two types of frequency ranges may be configured as shown in Table 3 below. Among the frequency ranges used in the NR system, FR1 may represent "sub 6 GHz range" and FR2 may represent "above 6 GHz range" and may be called millimeter wave (mmW).

**[Table 3]**

| Frequency Range designation | Corresponding frequency range | Subcarrier Spacing (SCS) |
|---|---|---|
| FR1 | 450 MHz - 6000 MHz | 15, 30, 60 kHz |
| FR2 | 24250 MHz - 52600 MHz | 60, 120, 240 kHz |

As mentioned above, the numerical values of the frequency ranges of the NR system may be changed. For example, FR1 may include a band of 410 MHz to 7125 MHz as shown in Table 4 below. That is, FR1 may include a frequency band of 6 GHz (or 5850 MHz, 5900 MHz, 5925 MHz, etc.) or higher. For example, the frequency band of 6 GHz (or 5850 MHz, 5900 MHz, 5925 MHz, etc.) or higher included in FR1 may include an unlicensed band. The unlicensed band may be used for various purposes, for example, for communication for vehicles (e.g., autonomous driving).

**[Table 4]**

| Frequency Range designation | Corresponding frequency range | Subcarrier Spacing (SCS) |
|---|---|---|
| FR1 | 410 MHz - 7125 MHz | 15, 30, 60 kHz |
| FR2 | 24250 MHz - 52600 MHz | 60, 120, 240 kHz |

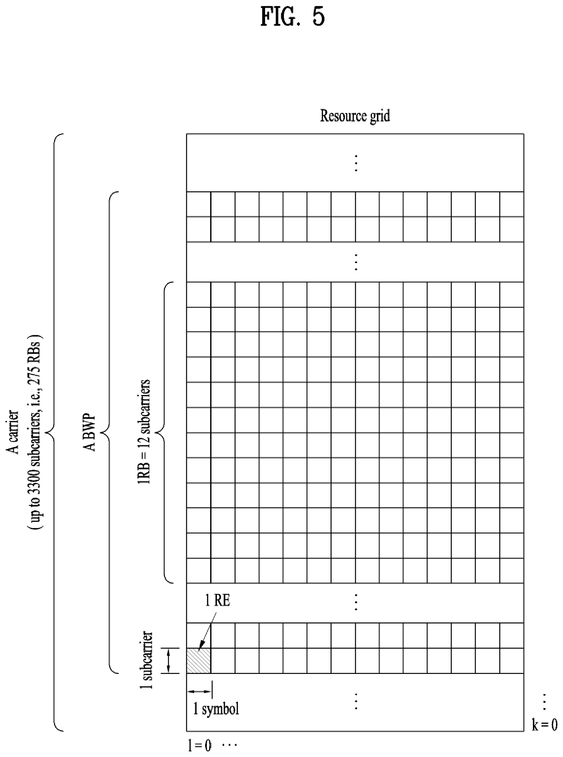

FIG. 5 illustrates the slot structure of a NR frame to which the present disclosure is applicable.

Referring to FIG. 5, one slot includes a plurality of symbols in the time domain. For example, one slot may include 14 symbols in a normal CP and 12 symbols in an extended CP. Alternatively, one slot may include 7 symbols in the normal CP and 6 symbols in the extended CP.

A carrier may include a plurality of subcarriers in the frequency domain. A resource block (RB) is defined as a plurality of consecutive subcarriers (e.g., 12 subcarriers) in the frequency domain. A bandwidth part (BWP) may be defined as a plurality of consecutive (P)RBs in the frequency domain, and the BWP may correspond to one numerology (e.g., SCS, CP length, etc.). The carrier may include up to N (e.g., 5) BWPs. Data communication may be conducted in an activated BWP. In a resource grid, each element may be referred to as a resource element (RE) and may be mapped to one complex symbol.

The wireless interface between UEs or the wireless interface between a UE and a network may be composed of an L1 layer, an L2 layer, and an L3 layer. In various embodiments of the present disclosure, the L1 layer may represent a physical layer. The L2 layer may represent, for example, at least one of a MAC layer, an RLC layer, a PDCP layer, and an SDAP layer. The L3 layer may represent, for example, an RRC layer.

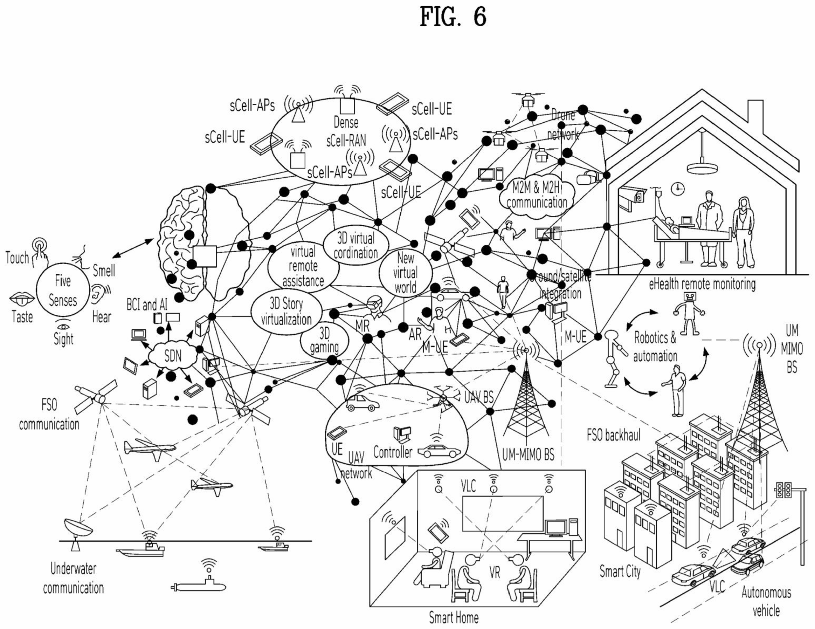

FIG. 6 shows a communication structure providable in a 6G system, based on an embodiment of the present disclosure. The embodiment of FIG. 6 may be combined with various embodiments of the present disclosure.

In 6G, new network characteristics may be as follows.
- Satellites integrated network
- Connected intelligence: Unlike the wireless communication systems of previous generations, 6G is innovative and wireless evolution may be updated from "connected things" to "connected intelligence". Al may be applied in each step (or each signal processing procedure which will be described below) of a communication procedure.
- Seamless integration of wireless information and energy transfer
- Ubiquitous super 3-dimension connectivity: Access to networks and core network functions of drones and very low earth orbit satellites will establish super 3D connection in 6G ubiquitous.

In the new network characteristics of 6G, several general requirements may be as follows.
- Small cell networks
- Ultra-dense heterogeneous network
- High-capacity backhaul
- Radar technology integrated with mobile technology: High-precision localization (or location-based service) through communication is one of the functions of the 6G wireless communication system. Accordingly, the radar system will be integrated with the 6G network.
- Softwarization and virtualization

Core implementation technology of 6G system is described below.
- Artificial Intelligence (Al): When Al is introduced to communication, real-time data transmission may be simplified and improved. Al may determine a method of performing complicated target tasks using countless analysis. That is, Al may increase efficiency and reduce processing delay. Operation consuming time such as handover, network selection, and resource scheduling immediately performed by using Al. Al may also play an important role in M2M, machine-to-human, and human-to-machine. In addition, Al may be a prompt communication in brain computer interface (BCI). An Al based communication system may be supported by metamaterial, intelligence structure, intelligence network, intelligence device, intelligence cognitive radio, self-maintaining wireless network, and machine learning.

Terahertz (THz) communication: A data rate may increase by increasing bandwidth. This may be performed by using sub-TH communication with wide bandwidth and applying advanced massive MIMO technology. THz waves, which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity to RF.

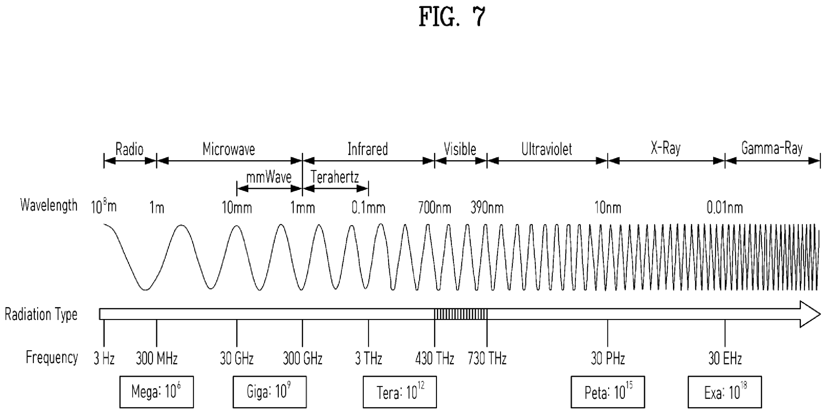

FIG. 7 shows an electromagnetic spectrum, based on an embodiment of the present disclosure. The embodiment of FIG. 7 may be combined with various embodiments of the present disclosure. The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.
- Massive MIMO technology (large-scale MIMO)
- Hologram beamforming (HBF)
- Optical wireless technology
- Free space optical (FSO) backhaul network
- Quantum communication
- Cell-free communication
- Integration of wireless information and power transmission
- Integration of wireless communication and sensing
- Integrated access and backhaul network
- Big data analysis
- Reconfigurable intelligent surface
- Metaverse
- Block-chain
- Unmanned aerial vehicle (UAV): An UAV or a drone will be an important factor in 6G wireless communication. In most cases, a high-speed data wireless connection may be provided using UAV technology. A base station (BS) entity may be installed in the UAV to provide cellular connectivity. The UAV may have certain features, which are not found in fixed BS infrastructures, such as easy deployment, strong line-of-sight links, and mobility-controlled degrees of freedom. During emergencies such as natural disasters, the deployment of terrestrial telecommunications infrastructure is not economically feasible and sometimes services cannot be provided in volatile environments. The UAV can easily handle this situation. The UAV will be a new paradigm in the field of wireless communication. This technology facilitates the three basic requirements of wireless networks, such as eMBB, URLLC and mMTC. The UAV can also serve a number of purposes, such as network connectivity improvement, fire detection, disaster emergency services, security and surveillance, pollution monitoring, parking monitoring, and accident monitoring. Therefore, UAV technology is recognized as one of the most important technologies for 6G communication.

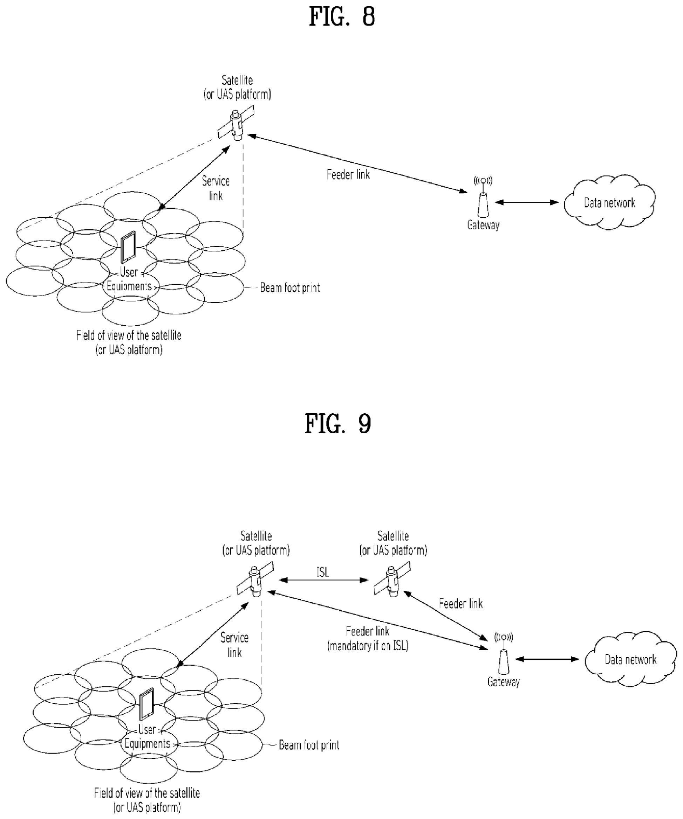

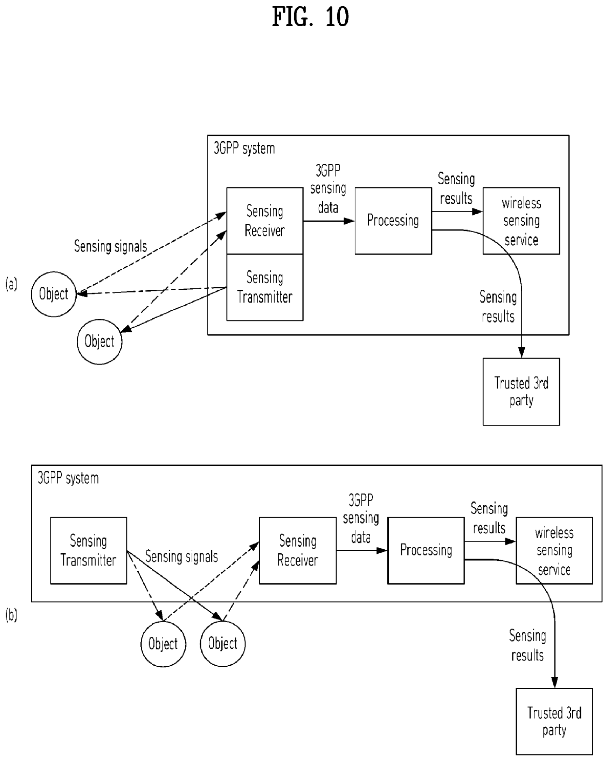

Autonomous driving (self-driving): Vehicle to everything (V2X) that is a core element for establishing an autonomous driving infrastructure may be a technology that vehicle communicates and shares with various elements in road for autonomous driving such as vehicle to vehicle (V2V), vehicle to infrastructure (V2I), and so on. To maximize a performance of autonomous driving and to secure high safety, high transmission speed and low latency technology have to be needed. Furthermore, in the future, autonomous driving may need to go beyond delivering warnings or guidance messages to drivers and actively intervene in vehicle operation and directly control the vehicle in dangerous situations. To this end, since the amount of information that needs to be transmitted and received may be enormous, autonomous driving is expected to be maximized in 6G being higher transmission speed and lower latency than 5G.
- Non-terrestrial networks (NTN): An NTN may refer to a network or a network segment that utilizes radio frequency (RF) resources aboard a satellite (or an unmanned aerial system (UAS) platform). FIG. 8 shows an example of an NTN typical scenario based on a transparent payload, based on an embodiment of the present disclosure. FIG. 9 shows an example of an NTN typical scenario based on a regenerative payload, based on an embodiment of the present disclosure. The embodiment of FIG. 8 or FIG. 9 may be combined with various embodiments of the present disclosure. Referring to FIG. 8, a satellite (or an UAS platform) may establish a service link with a UE. The satellite (or the UAS platform) may be connected with a gateway through a feeder link. The satellite may be connected with a data network through the gateway. A beam footprint may refer to an area where signals transmitted by the satellite can be received. Referring to FIG. 9, a satellite (or an UAS platform) may establish a service link with a UE. The satellite (or the UAS platform) connected with the UE may be connected with another satellite (or another UAS platform) through an inter-satellite link (ISL). Another satellite (or another UAS platform) may be connected with a gateway through a feeder link. Based on the regenerative payload, the satellite may be connected with a data network through the gateway and another satellite. If the ISL does not exist between the satellite and another satellite, a feeder link between the satellite and the gateway may be required. FIGS. 8 and 9 are only examples of NTN scenarios, and the NTN can be implemented based on various types of scenarios. For example, the satellite (or the UAS platform) may implement a transparent or regenerative (with on board processing) payload. For example, the satellite (or the UAS platform) may generate multiple beams over a specified service area based on the field of view of the satellite (or the UAS platform). For example, the field of view of the satellite (or the UAS platform) may vary depending on an on-board antenna diagram and a minimum elevation angle. For example, the transparent payload may include radio frequency filtering, frequency conversion, and amplification. Therefore, the waveform signal repeated by the payload may not be changed. For example, the regenerative payload may include radio frequency filtering, frequency conversion and amplification, demodulation/decryption, switching and/or routing, and coding/modulation. For example, the regenerative payload may be substantially equivalent to equipping the satellite (or the UAS platform) with all or part of the base station functionality.
- Integrated sensing and communication (ISAC): Wireless sensing is a technology enabler to acquire information about characteristics of the environment and/or objects within the environment that uses radio frequency to determine the distance (range), angle, or instantaneous linear velocity of objects, etc. Radio frequency sensing functionality can provide services for device-free object localization as there is lack of need for the object to be connected via a device in the network. The capabilities to obtain range, velocity, and angle information from the radio frequency signals can provide a broad range of new functionality, such as various objects detection, object recognition (e.g., vehicle, human, animal, UAV) and high accuracy localization, tracking and activity recognition. For example, the wireless sensing service may provide input to different verticals (e.g., unmanned aerial vehicle, smart home, V2X, factories, railways, public safety, etc.) enabling applications offering e.g., intruder detection, assisted automotive maneuvering and navigation, trajectory tracing, collision avoidance, traffic management, health and activity monitoring. In some cases, wireless sensing can also use non-3GPP type sensors (e.g., radar, camera) to further support the 3GPP-based sensing. For example, the operation of the wireless sensing service, i.e., sensing operation, may rely on processing the transmissions, reflections, and scattering of wireless sensing signals. Wireless sensing, therefore, may have the opportunity to enhance the legacy system from a communication network to a wireless communication and sensing network. FIG. 10 shows an example of a sensing operation, based on an embodiment of the present disclosure. The embodiment of FIG. 10 may be combined with various embodiments of the present disclosure. Specifically, (a) of FIG. 10 shows an example of sensing (e.g., monostatic sensing) with co-located sensing receiver and sensing transmitter, and (b) of FIG. 10 shows an example of sensing (e.g., bistatic sensing) with separated sensing receiver and sensing transmitter.

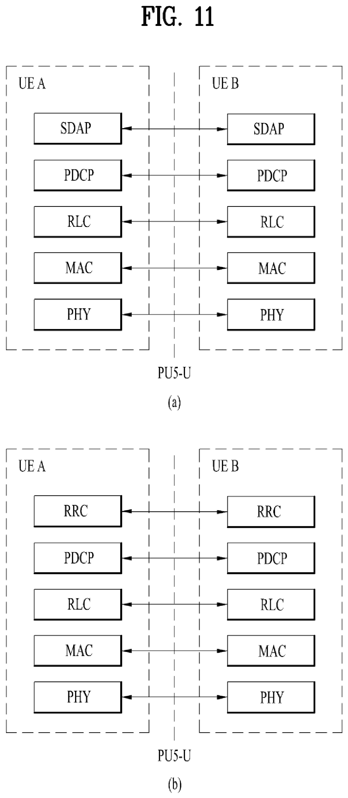

FIG. 11 illustrates a radio protocol architecture for SL communication. Specifically, FIG. 11-(a) shows a user plane protocol stack of NR, and FIG. 11-(b) shows a control plane protocol stack of NR.

Hereinafter, a sidelink synchronization signal (SLSS) and synchronization information will be described.

The SLSS is an SL-specific sequence, and may include a primary sidelink synchronization signal (PSSS) and a secondary sidelink synchronization signal (SSSS). The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, the UE may detect an initial signal and acquire synchronization using the S-PSS. For example, the UE may acquire detailed synchronization using the S-PSS and the S-SSS, and may detect a synchronization signal ID.

A physical sidelink broadcast channel (PSBCH) may be a (broadcast) channel on which basic (system) information that the UE needs to know first before transmission and reception of an SL signal is transmitted. For example, the basic information may include SLSS related information, a duplex mode (DM), time division duplex uplink/downlink (TDD UL/DL) configuration, resource pool related information, the type of an application related to the SLSS, a subframe offset, and broadcast information. For example, for evaluation of PSBCH performance, the payload size of PSBCH in NR V2X may be 56 bits including CRC of 24 bits.

The S-PSS, S-SSS, and PSBCH may be included in a block format (e.g., an SL synchronization signal (SS)/PSBCH block, hereinafter sidelink-synchronization signal block (S-SSB)) supporting periodic transmission. The S-SSB may have the same numerology (i.e., SCS and CP length) as a physical sidelink control channel (PSCCH)/physical sidelink shared channel (PSSCH) in the carrier, and the transmission bandwidth thereof may be within a (pre)set sidelink BWP (SL BWP). For example, the bandwidth of the S-SSB may be 11 resource blocks (RBs). For example, the PSBCH may span 11 RBs. The frequency position of the S-SSB may be (pre)set. Accordingly, the UE does not need to perform hypothesis detection at a frequency to discover the S-SSB in the carrier.

In the NR SL system, a plurality of numerologies having different SCSs and/or CP lengths may be supported. In this case, as the SCS increases, the length of the time resource in which the transmitting UE transmits the S-SSB may be shortened. Thereby, the coverage of the S-SSB may be narrowed. Accordingly, in order to guarantee the coverage of the S-SSB, the transmitting UE may transmit one or more S-SSBs to the receiving UE within one S-SSB transmission period according to the SCS. For example, the number of S-SSBs that the transmitting UE transmits to the receiving UE within one S-SSB transmission period may be pre-configured or configured for the transmitting UE. For example, the S-SSB transmission period may be 160 ms. For example, for all SCSs, the S-SSB transmission period of 160 ms may be supported.

For example, when the SCS is 15 kHz in FR1, the transmitting UE may transmit one or two S-SSBs to the receiving UE within one S-SSB transmission period. For example, when the SCS is 30 kHz in FR1, the transmitting UE may transmit one or two S-SSBs to the receiving UE within one S-SSB transmission period. For example, when the SCS is 60 kHz in FR1, the transmitting UE may transmit one, two, or four S-SSBs to the receiving UE within one S-SSB transmission period.

For example, when the SCS is 60 kHz in FR2, the transmitting UE may transmit 1, 2, 4, 8, 16 or 32 S-SSBs to the receiving UE within one S-SSB transmission period. For example, when SCS is 120 kHz in FR2, the transmitting UE may transmit 1, 2, 4, 8, 16, 32 or 64 S-SSBs to the receiving UE within one S-SSB transmission period.

When the SCS is 60 kHz, two types of CPs may be supported. In addition, the structure of the S-SSB transmitted from the transmitting UE to the receiving UE may depend on the CP type. For example, the CP type may be normal CP (NCP) or extended CP (ECP). Specifically, for example, when the CP type is NCP, the number of symbols to which the PSBCH is mapped in the S-SSB transmitted by the transmitting UE may be 9 or 8. On the other hand, for example, when the CP type is ECP, the number of symbols to which the PSBCH is mapped in the S-SSB transmitted by the transmitting UE may be 7 or 6. For example, the PSBCH may be mapped to the first symbol in the S-SSB transmitted by the transmitting UE. For example, upon receiving the S-SSB, the receiving UE may perform an automatic gain control (AGC) operation in the period of the first symbol for the S-SSB.

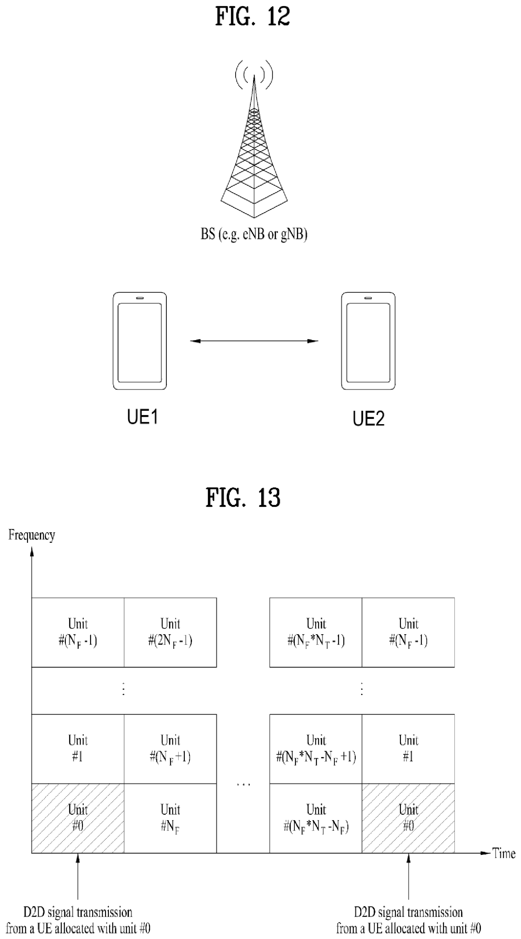

FIG. 12 illustrates UEs performing V2X or SL communication.

Referring to FIG. 12, in V2X or SL communication, the term UE may mainly refer to a user's UE. However, when network equipment such as a BS transmits and receives signals according to a communication scheme between UEs, the BS may also be regarded as a kind of UE. For example, UE 1 may be the first device 100, and UE 2 may be the second device 200.

For example, UE 1 may select a resource unit corresponding to a specific resource in a resource pool, which represents a set of resources. Then, UE 1 may transmit an SL signal through the resource unit. For example, UE 2, which is a receiving UE, may receive a configuration of a resource pool in which UE 1 may transmit a signal, and may detect a signal of UE 1 in the resource pool.

Here, when UE 1 is within the connection range of the BS, the BS may inform UE 1 of a resource pool. On the other hand, when the UE 1 is outside the connection range of the BS, another UE may inform UE 1 of the resource pool, or UE 1 may use a preconfigured resource pool.

In general, the resource pool may be composed of a plurality of resource units, and each UE may select one or multiple resource units and transmit an SL signal through the selected units.

FIG. 13 illustrates resource units for V2X or SL communication.

Referring to FIG. 13, the frequency resources of a resource pool may be divided into NF sets, and the time resources of the resource pool may be divided into NT sets. Accordingly, a total of NF * NT resource units may be defined in the resource pool. FIG. 13 shows an exemplary case where the resource pool is repeated with a periodicity of NT subframes.

As shown in FIG. 13, one resource unit (e.g., Unit #0) may appear periodically and repeatedly. Alternatively, in order to obtain a diversity effect in the time or frequency dimension, an index of a physical resource unit to which one logical resource unit is mapped may change in a predetermined pattern over time. In this structure of resource units, the resource pool may represent a set of resource units available to a UE which intends to transmit an SL signal.

Resource pools may be subdivided into several types. For example, according to the content in the SL signal transmitted in each resource pool, the resource pools may be divided as follows.
(1) Scheduling assignment (SA) may be a signal including information such as a position of a resource through which a transmitting UE transmits an SL data channel, a modulation and coding scheme (MCS) or multiple input multiple output (MIMO) transmission scheme required for demodulation of other data channels, and timing advance (TA). The SA may be multiplexed with SL data and transmitted through the same resource unit. In this case, an SA resource pool may represent a resource pool in which SA is multiplexed with SL data and transmitted. The SA may be referred to as an SL control channel.
(2) SL data channel (physical sidelink shared channel (PSSCH)) may be a resource pool through which the transmitting UE transmits user data. When the SA and SL data are multiplexed and transmitted together in the same resource unit, only the SL data channel except for the SA information may be transmitted in the resource pool for the SL data channel. In other words, resource elements (REs) used to transmit the SA information in individual resource units in the SA resource pool may still be used to transmit the SL data in the resource pool of the SL data channel. For example, the transmitting UE may map the PSSCH to consecutive PRBs and transmit the same.
(3) The discovery channel may be a resource pool used for the transmitting UE to transmit information such as the ID thereof. Through this channel, the transmitting UE may allow a neighboring UE to discover the transmitting UE.

Even when the SL signals described above have the same content, they may use different resource pools according to the transmission/reception properties of the SL signals. For example, even when the SL data channel or discovery message is the same among the signals, it may be classified into different resource pools according to determination of the SL signal transmission timing (e.g., transmission at the reception time of the synchronization reference signal or transmission by applying a predetermined TA at the reception time), a resource allocation scheme (e.g., the BS designates individual signal transmission resources to individual transmitting UEs or individual transmission UEs select individual signal transmission resources within the resource pool), signal format (e.g., the number of symbols occupied by each SL signal in a subframe, or the number of subframes used for transmission of one SL signal), signal strength from a BS, the strength of transmit power of an SL UE, and the like.

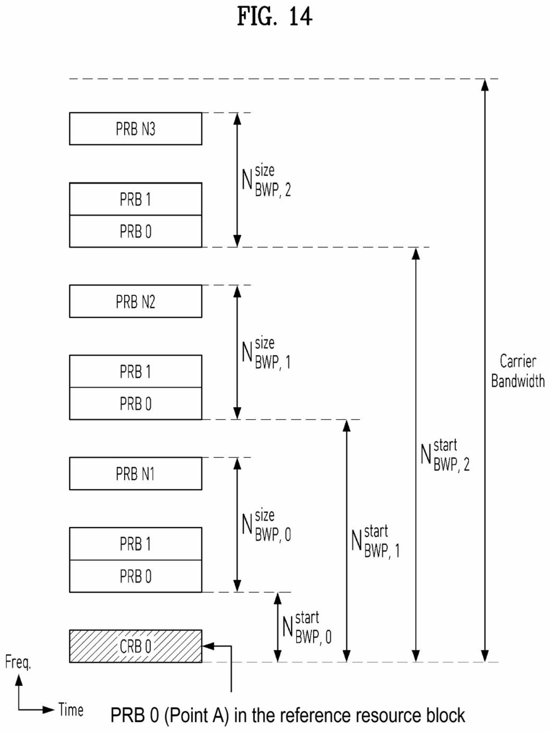

FIG. 14 shows an example of a BWP, based on an embodiment of the present disclosure. The embodiment of FIG. 14 may be combined with various embodiments of the present disclosure. It is assumed in the embodiment of FIG. 14 that the number of BWPs is 3.

Referring to FIG. 14, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

A sidelink synchronization signal (SLSS) may include a primary sidelink synchronization signal (PSSS) and a secondary sidelink synchronization signal (SSSS), as a sidelink (SL)-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

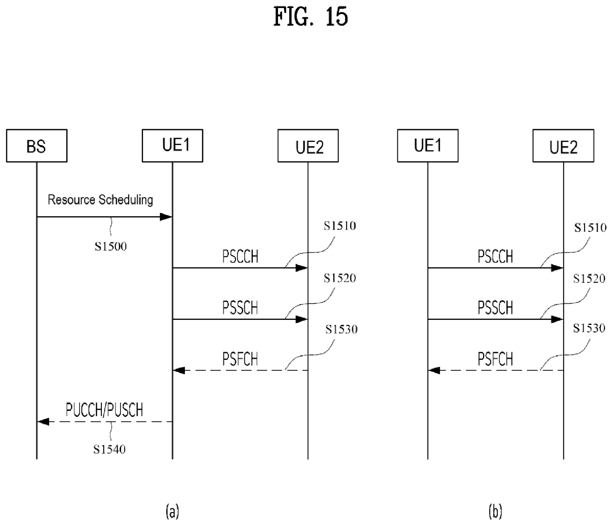

FIG. 15 shows a procedure of performing V2X or SL communication by a UE based on a resource allocation mode, based on an embodiment of the present disclosure. The embodiment of FIG. 15 may be combined with various embodiments of the present disclosure.

Referring to (a) of FIG. 15, in a resource allocation mode 1, a base station may schedule SL resource(s) to be used by a UE for SL transmission. For example, in step S1500, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S1510, the first UE may transmit a PSCCH (e.g., sidelink control information (SCI) or 1st-stage SCI) to a second UE based on the resource scheduling. In step S1520, the first UE may transmit a PSSCH (e.g., 2nd-stage SCI, MAC PDU, data, etc.) related to the PSCCH to the second UE. In step S1530, the first UE may receive a PSFCH related to the PSCCH/PSSCH from the second UE. For example, HARQ feedback information (e.g., NACK information or ACK information) may be received from the second UE through the PSFCH. In step S1540, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling.

Referring to (b) of FIG. 15, in a resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subChannel(s). For example, in step S1510, a first UE which has selected resource(s) from a resource pool by itself may transmit a PSCCH (e.g., sidelink control information (SCI) or 1st-stage SCI) to a second UE by using the resource(s). In step S1520, the first UE may transmit a PSSCH (e.g., 2nd-stage SCI, MAC PDU, data, etc.) related to the PSCCH to the second UE. In step S1530, the first UE may receive a PSFCH related to the PSCCH/PSSCH from the second UE.

Referring to (a) or (b) of FIG. 15, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format.

Referring to (a) or (b) of FIG. 15, in step S1530, the first UE may receive the PSFCH. For example, the first UE and the second UE may determine a PSFCH resource, and the second UE may transmit HARQ feedback to the first UE using the PSFCH resource.

Referring to (a) of FIG. 15, in step S1540, the first UE may transmit SL HARQ feedback to the base station through the PUCCH and/or the PUSCH.

The sidelink described above may be defined as communication between UEs or direct communication between UEs. In this case, the PSCCH may be defined as a physical control channel for communication between UEs, the PSSCH may be defined as a physical data channel or physical shared channel for communication between UEs, and the PSFCH may be defined as a physical feedback transmission channel between UEs.

A SoftV2X system may be a system in which a SoftV2X server receives a VRU message or a personal safety message (PSM) from a vulnerable road user (VRU) or a V2X vehicle and transfers information on a neighbor VRU or vehicle based on the VRU message or the PSM message or may analyze a road condition, etc. on which neighbor VRUs or vehicles move and may transmit a message informing a neighbor VRU or vehicle of a collision warning, etc. based on the analyzed information (e.g., through a downlink signal) via V2X communication using a UU interface. Here, the VRU message may be a message transmitted to the SoftV2X server through the UU interface, and may include mobility information about the VRU, such as a position, a movement direction, a movement path, and a speed of the VRU. That is, the SoftV2X system may use a method of receiving mobility information of VRUs and/or vehicles related to V2X communication through the UU interface and controlling a driving route or a VRU movement flow of the VRU, etc. based on the mobility information received by the SoftV2X server, such as a network. The SoftV2X system may be configured in relation to V2N communication.

Hereinafter, a method for providing a V2X service through a network will be described in detail based on the above-described contents.

### Inter-network interface structure based on messaging protocol for V2N service

A V2X service plays a significant role in ensuring safety, including collision prevention, and in controlling efficient traffic flow by allowing road users (vehicles, road side units (RSUs), pedestrians, etc.) to transmit state information (position, speed, size, etc.) or environmental information (map information, signal information, etc.) to nearby road users through communication. Currently, various V2X services using multiple communication schemes (short range communication, long range communication) exist, and service level requirements are defined for organic operation of V2X services in which a plurality of intelligent transportation system (ITS) stations participate.

V2X messages may be generated by a vehicle and infrastructure and may carry information related to a surrounding environment, road conditions, situations, and events. V2X messages may be utilized for various purposes, including interaction between vehicles, communication between a vehicle and infrastructure, object detection, and warning systems. In other words, such V2X messages may be generated by a vehicle or infrastructure and may include information related to a surrounding environment, situations, and events. In addition, V2X messages may include information collected through sensors of a vehicle, global positioning system (GPS) information, and communication devices, and may be configured in a standardized format. The standardized V2X messages may include various data, such as position, speed, acceleration, lane change information, and traffic signal states. V2X messages may be transmitted in a unidirectional manner or a bidirectional manner, and information included in the V2X messages may be updated and processed in real time. In a V2X environment requiring low-latency communication, rapid transmission of a message is essential, and a latency of several milliseconds or less may be extremely important for rapid situation response such as accident prevention or collision warning. Further, since communication based on a V2X message relies on real-time interaction between a vehicle and infrastructure, message transfer speed and reliability may play an important role in providing a warning to a driver and enabling a vehicle to respond appropriately to a situation. Accordingly, in V2X message communication, it is required to minimize message transfer time and latency, and a design is required to enable an appropriate buffering model and a transmission method for rapid data exchange based on network technologies and protocols suitable for real-time communication.

A connection structure for providing such a V2X service considers an architecture of vehicle-to-network-to-everything (V2N2X) (or V2N or SoftV2X) expanded to a network scope. Such an architecture may be schematically represented at a high level according to requirements for satisfying a specific use case by vehicles, infrastructure, service providers, and information sharing instances. Hereinafter, a V2N architecture will be described in detail.

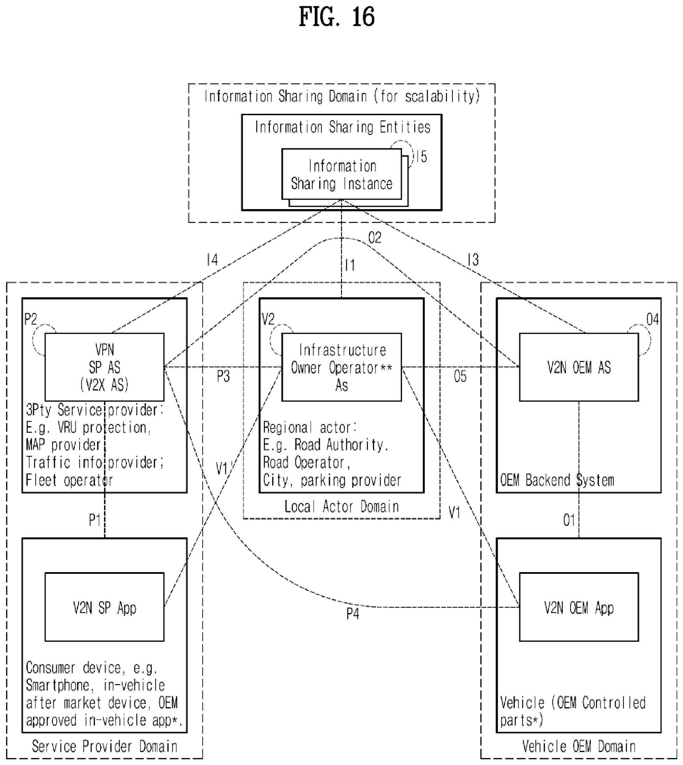

FIG. 16 is a diagram for explaining an architecture of a V2N interface.

Referring to FIG. 16, an architecture of a V2N interface (or SoftV2X interface) may include an infrastructure owner operator (IOO) autonomous system (AS), a V2N original equipment manufacturer (OEM) autonomous system (AS), a V2N OEM application, a V2N service provider (SP) autonomous system (V2XAS), and an information sharing instance. Detailed definitions of each configuration are described below.
- IOO AS: as a local actor that provides services related to an automotive and transportation domain, the IOO AS is often based on infrastructure such as sensors and road or parking facilities. For example, the IOO AS may be a city, a road authority, a road operator, or a city or parking provider.
- V2N OEM AS: as an OEM backend component (for example, a control entity) that manages a V2N OEM application in a vehicle OEM domain, the V2N OEM AS may allow vehicle connectivity. The V2N OEM AS performs a proxy and filtering role for information transmitted and received by the vehicle OEM application.
- V2N OEM application: as an in-vehicle component that implements service functions for a service user in a vehicle OEM domain, the V2N OEM application receives data from other system components for operation of a service. Depending on a situation, the V2N OEM application may implement a function for warning a human driver or a function for supporting advanced driver assistance system (ADAS) or automated driving (AD) functionality of a vehicle.
- V2N V2XAS: in a service provider domain, a V2N service provider application server (V2N SPAS) is a generic term referring to an actor that provides services related to an automotive domain, and may provide services such as a VRU protection service, a MAP service, a traffic information service, and a fleet operator service.
- Information sharing instance: as an entity that connects each AS, the information sharing instance may interwork information across national or regional boundaries. For example, the information sharing instance may perform a relay role in establishing a connection by hosting a server that desires to be connected, similar to a rendezvous server. In addition, when relaying a message of an entity that does not conform to a standard, the information sharing instance may perform an appropriate translation function as needed.

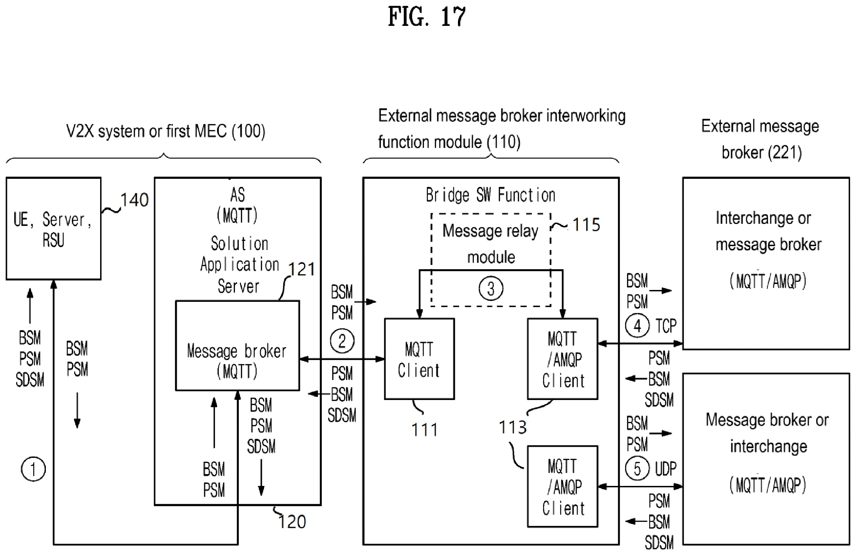

FIG. 17 is a diagram for explaining interfaces related to a connection structure between two servers that provide a SoftV2X service.

Referring to FIG. 17, one MEC or V2X system 100 may include a UE (a RSU or a server) 140 that transmits and receives a V2X message, a first server 120 that provides a SoftV2X service, and a bridge 110. The MEC or V2X system 100 may perform exchange of data or messages with external brokers 221 using the bridge 110.

Such a connection structure may be established based on at least one of interface 1 (①) to interface 5 (⑤). For each interface, a connection structure and an operation method may be defined as follows. At least one of the interfaces described below may be an interface using a messaging protocol based on Message Queueing Telemetry Transport (MQTT). For convenience of description, an MQTT-based client and an MQTT-based broker are defined and described as a client and a broker.

### (1) Interface 1 (①)

Interface 1 (①) may be an interface connected between UEs 140 that generate and transmit a V2X message and a first server. The UE (or RSU, server, etc.) may be an entity that publishes a message or may be a client that subscribes to a message.

### (2) Interface 2 (②)

Interface 2 (②) may be an interface that connects a broker 121 of the first server 120 and a bridge (client-message relay module-client) that connects a messaging protocol to an external entity. Through interface 2 (②), data or messages having compatibility with a standardized format based on MQTT (a message format defined in a 5G Automotive Association (5GAA) standard) may be exchanged, or data or messages using a non-standard message or protocol format internally operated by the first server 120 may be exchanged.

### (3) Interface 3 (③)

Interface 3 (③) may be an interface that connects an internal client 111 and an external client 113 included in the bridge 110. Alternatively, interface 3 (③) may be an interface that connects the internal client 111, a message relay module 115, and the external client 113. For interface 3 (③), at least one of the two clients may directly perform a function corresponding to a function of the message relay module 115. In this case, the message relay module 115 may be omitted.

Specifically, interface 3 (③) may be an interface for relaying, to the external client 113, a message payload obtained by decoding an MQTT protocol stack at the internal client 111. Data or messages relayed by the internal client 111 through interface 3 (③) may have a message format different from data or messages received through interface 2 (②). For example, the data or messages received through interface 2 (②) may be messages in which additional fields or data are defined by the V2X system or the first server 120 for proprietary operation and/or for enabling faster and more efficient provision of a V2X service to a user. On other hand, messages relayed through interface 3 (③) may be pure standardized messages according to a standardized format (see 5GAA TR-239129).

For example, the internal client 111 may remove an MQTT protocol stack (layer) from the data or messages received through interface 2 (②) and may transmit a pure standardized-format message, from which the MQTT protocol stack is removed, to the external client 113. Alternatively, the internal client 111 may convert the data or messages received through interface 2 (②) into messages corresponding to a messaging protocol of an external server.

### (4) Interface 4 (④) and/or Interface 5 (⑤)

Interface 4 (④) may be an interface that connects the external client 113 and an external broker 221. Here, interface 4 (④) may be an interface that exchanges data through a Transmission Control Protocol (TCP) session connection. In this case, the external client 113 and the external broker 221 may initialize or configure transmission and reception IP addresses, ports, topics, and configuration information in advance. Alternatively, the external client 113 may convert the data or messages, from which the MQTT protocol stack is removed and which are transmitted from the internal client 111, into data or messages having an MQTT protocol stack related to the external broker. The external client 113 may publish or transmit the converted data or messages to the external broker 221.

Interface 5 (⑤) may be an interface that connects the external client 113 and the external broker 221 through a User Datagram Protocol (UDP) session connection. A UDP-based external client may transmit messages or data received from interface 3 (③) to a broker of a second server (or interchange(s)) in a unidirectional manner.

In addition, the above-described bridge may relay messages or data between two servers based on improved functions and logic. Hereinafter, improved functions and logic of the bridge will be described in detail.

### Advanced functions and logic of bridge

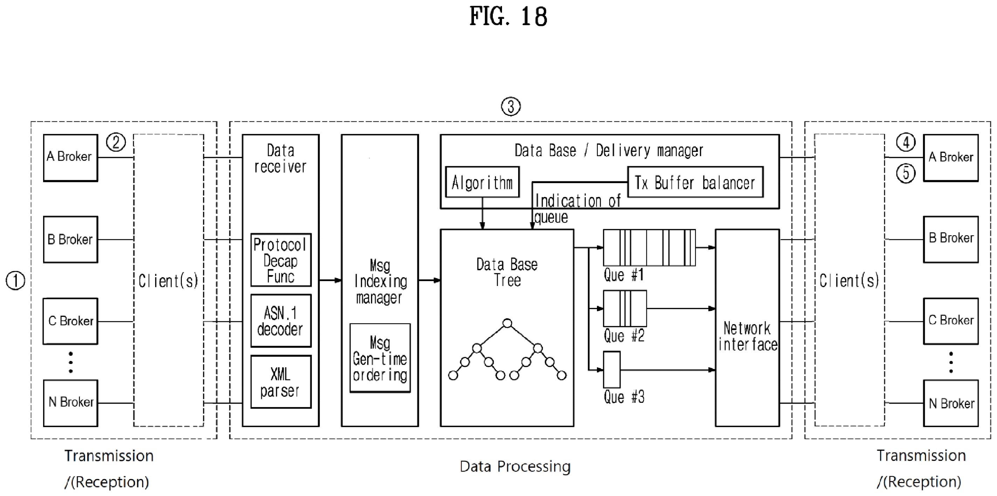

FIG. 18 is a diagram for explaining data processing of a bridge.

Data or messages related to a typical V2X service may be transmitted from a V2X entity or a V2X system (application, infrastructure (e.g., RSU), or server) to a corresponding MQTT-based broker based on appropriate filtering information (for example, geographic information). Then, the data or messages may be transmitted to a V2X application server through a session pre-established with the broker. In this case, the data or messages of the V2X service of V2X entities may need to be transferred to another external server (MEC, server, network, or AS). For this purpose, the V2X application server may be connected to an external server by using the above-described bridge. As described above, the bridge may include symmetric TCP-based internal clients and external clients in order to maintain an existing TCP-based client reception or subscription structure in a connection between two servers to which a messaging protocol is applied.

Referring to FIG. 18, an internal client may forward messages transmitted by a first broker to an external client after performing data processing according to additional logic.

Each component illustrated in FIG. 18 may operate as follows. For convenience of description, the following description is provided on the assumption that data or messages are published from first brokers. However, the same description may be equally applied to a case in which data or messages are published from second brokers of an external server (only a transmitting entity and a receiving entity are different).

### (1) Transmitter

Entities (application, infrastructure (e.g., RSU), or server) that generate and transmit data may packetize and transmit data according to a transmission protocol (for example, an MQTT protocol) through connected or connectable brokers (broker A, broker B, broker C, ..., broker N).

### (2) Receiver

A receiver may receive and process data transmitted from a transmitter and a network. The receiver (reception side) may accept the data transmitted from the transmitter and the network, decode packets, and restore the packets into a message to be transmitted. In this case, data for additional functions other than pure message data may support a filtering function for external transmission. For example, the receiver may be an external client.

### (3) Data processing

Data processing may classify data or messages transmitted from the transmitter through appropriate data processing, connect the classified data or messages to a data interface to be connected, and perform appropriate data exchange. The data processing may operate according to functions as described below. The data processing may be performed at an application server or an internal client.

### 1) Data receiver

A data receiver (or an internal client) may receive data or messages from the transmitter and may perform decoding according to a transmission protocol and an encoding stream method. The data receiver may identify an occurrence time of a message obtained during a decoding process (for example, identified through Extensible Markup Language (XML) data of the message). The data receiver may transmit information on the identified occurrence time of the data or message to a database tree such that the identified data or message is stored in a database according to the occurrence time. In this case, the occurrence time of the message may be set as a basic parameter.

### 2) Database tree

A database tree may configure a tree-based database (for example, a red-black tree-based database) that classifies received data or messages according to an occurrence time of a message in a relational database structure. The database tree may interwork with an algorithm of a database processing manager to configure a database in which the received data or messages are classified based on a degree of association among additional information (for example, geographical information, direction information, speed information, velocity information, etc.) with reference to the occurrence time of the message. Alternatively, the internal client may configure the database to include the above-described database tree.

### 3) Data processing manager

A data processing manager may include an algorithm capable of creating a tree structure in a database and a transmission (Tx) buffer balancer. The algorithm may be an application programming interface (API) for configuring a tree in the database based on parameters of data or messages. The buffer balancer may perform appropriate buffering and queuing for data or messages included in the database and may manage encapsulation of the queued data or messages. Alternatively, the internal client may include the data processing manager.

### 4) Network interface

A network interface may encapsulate queued data by using a stack required in a network domain and may perform preparation for transmitting a message including the encapsulated data.

Function units of the bridge 110 may adaptively turn data processing functions on or off based on an packet insertion condition according to the size or priority of a database, thereby controlling or adjusting buffering.

Hereinafter, a buffer model capable of effectively transmitting a message according to a transmission environment in association with a SoftV2X or V2X service will be described in detail.

### Buffering model and aggregation method for V2X service

In the above-described transmission structure for V2X message communication, the following problems may occur.
- Network bandwidth and congestion: Due to various mesh-based connections (vehicles, infrastructure, servers), in a real-time communication environment requiring transmission of a large amount of data, network bandwidth may be insufficient, or processing data may be concentrated in a predetermined time period, thereby causing the communication environment to become significantly congested. The insufficiency of network bandwidth or the congestion of the communication environment may affect a transmission speed and reliability of message transmission.
- Loss of message validity due to an improper buffering model or aggregation time: If a V2X vehicle or infrastructure does not support an appropriate buffering model, a timely response to an actual emergency situation of a vehicle, a pedestrian, or the like may not be achieved, and a message may fail to be delivered to surrounding UEs within a validity time (or within a delay requirement).
- Quality assurance mechanism: In real-time communication, latency and reliability may be significantly important. However, since most modules managing transmission transmit messages based on a static buffering model, an appropriate response to variation of latency may not be supported.

In a V2X message transmission and reception system, a buffer model currently performs buffering only in a cycle corresponding to a single operational message size, and an appropriate buffer model is not defined. For example, the buffer model in the V2X message transmission and reception system is designed such that, when a single message is generated, the message is transmitted. In particular, for a sensor data sharing message (SDSM), a transmitting device aggregates objects in an arbitrary order, defines a value of a DetectedObjectList field to generate a single message, and transmits the generated message. Such a buffering method (or a message generation and transmission method) is a buffering method based on completion of a message rather than a buffering method based on an actual transmission environment, and thus data or a message may not be transmitted efficiently according to the transmission environment, or a message fails to be transmitted within a validity time required by the message (for example, a service delay requirement).

Hereinafter, the following is proposed: (1) buffering conditions for queuing received data; and (2) techniques for streaming remaining data after transmitting basic data in a Uu-based connected session in a conventional structure in which queued data is generated as a data payload and then a header is created.

In a V2X service, message aggregation for message buffer modeling and transmission packet configuration may be performed at various levels (vehicle, infrastructure, and network). Optimal processing (or buffer modeling) of queues of such data or messages may lead to faster message decoding at a receiving end and an improved user experience.

Hereinafter, message buffer modeling will be described in detail.

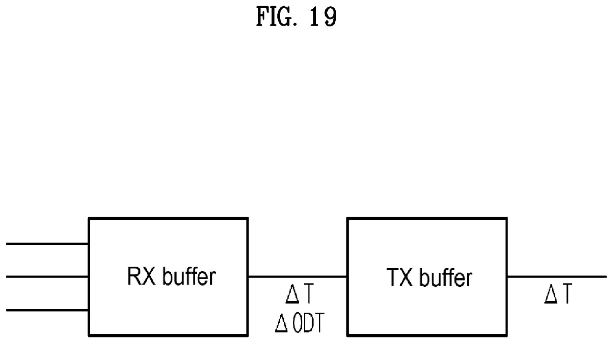

FIG. 19 is a diagram for explaining a buffer model for V2X communication.

Referring to FIG. 19, a buffer model for V2X communication may include an RX buffer configured to receive and aggregate data, and a TX buffer configured to receive the received and aggregated data and perform buffering for transmission.

In general, data may be received at an RX buffer, and the received data may be stored in an array according to a predetermined criterion. For output, some of the data stored in the array may be delivered to a TX side, and arrays of an output buffer in the TX side may buffer data for transmission. In this case, a value of ΔT and a time duration for setting the value of ΔT may vary depending on an implementation, but a TX buffer period may generally be configured based on output of a single message. However, the configuration of the TX buffer period is not based on an actual data flow, but is based on buffering of a completed message in the array. In addition, data reception does not involve reception of a completed chunk in units of bytes at once, but may involve an operation in which byte sequences of partial received data are input to the RX buffer. Accordingly, an efficient aggregation method and a buffer model for data packets need to be newly defined. Criteria for aggregation of data or data packets and/or for definition of a buffer model need to consider not only buffering of an array, but also characteristics of a transmission network and/or an actual object detection time. In other words, it may be reasonable to define aggregation of data or data packets and/or a buffer model such that buffering and queuing of a message are performed based on the characteristics of the transmission network and/or the actual object detection time.

Hereinafter, a method of performing buffering and queuing of a message based on characteristics of a transmission network and/or an actual object detection time (hereinafter, buffering condition 1 or buffering condition 2) will be described in detail.

### (1) Buffering condition 1 (considering TCP round-trip time (RTT) as a characteristic of a transmission network)

The RTT of TCP is a metric for measuring a time required for data to be transmitted from a source to a destination and for a response to be returned in a TCP-based network. The RTT is used as an important indicator for measuring network latency, and may play an important role in evaluating performance and stability of TCP communication. In a message delivery process based on TCP, (i) a request message is first transmitted from a source (for example, a client) to a destination (for example, a server), (ii) the destination performs processing for the request message and then transmits a response message (or an acknowledgment (ACK)) back to the source, and (iii) the source receives the response message from the destination. The RX buffer and the TX buffer may buffer data based on a connected ΔT (= TCP RTT) of a TCP session. In this case, in order to avoid unnecessary consumption of (reception/decoding) time on a network, a client may buffer data for a predetermined time and fill the TX buffer. When a data chunk on the TX side buffered based on the RTT is transmitted, the data chunk may be received at the RX side through a symmetrically implemented (ideal) buffer model. In this case, ΔT may be calculated on an average basis, and a specific application method may be regarded as an implementation issue.

### (2) Buffering condition 2 (considering an object detection time, which is a time for generating or outputting object data)

In general, object detection may be performed 5 to 7 times per second, and data for detected objects may be generated or output. That is, an object may be detected every 143 ms. This means that, based on 30 frames per second (fps), objects in an image may be detected once every 4.29 frames or every 5 frames. Hereinafter, a time during which an on-board unit (OBU) and a roadside unit (RSU) detect an object and output object information or object data for detected data is assumed as ΔODT (object detection time). In this case, by performing buffering based on ΔODT, which is a time of actual data generation, a buffering model corresponding to data generation and input may be implemented.

Hereinafter, a method of defining a buffer model based on the RTT of TCP and/or the ODT described above will be described in detail.

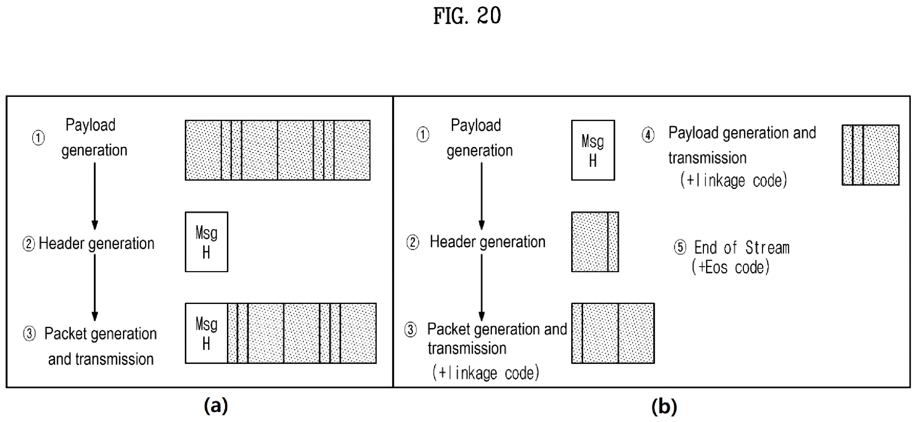

FIGS. 20 to 22 are diagrams for explaining a method of transmitting queued data based on a proposed buffer model.

Referring to FIG. 20(a), in the related art, data or a message is transmitted after aggregation of objects to be packetized is completed (that is, after object detection on an image is completed) and a corresponding header is generated. Specifically, in object detection on an image, a payload for aggregated objects is generated (①), a header including a total length of object data and/or an object count for the aggregated objects is generated (②), and when a packet structure or a single message is completed through generation of the payload and the header, a message including the payload and the header is transmitted through a network stack (③). In other words, after the payload for all detected objects is constructed, the header including the length and/or the number of objects related to the payload is configured, and the message including the payload and the header may be transmitted. That is, in the related art, a payload for an SDSM may be aggregated and buffered based on a counter value defined for the SDSM, and when a message form is constructed through execution of aggregation and buffering operations, the payload may be transmitted at a message unit or a message boundary. That is, in the related art, when a message form is configured through execution of aggregation and buffering operations based on a counter value defined for an SDSM, a payload may be transmitted on a message-unit or message-boundary basis. As described above, a transmission and/or buffering method of an SDSM that relies on aggregation of object information and a counter does not consider an actual network environment or a relationship with data generation, and thus latency may be increased more than necessary depending on a channel environment.

In contrast, referring to FIG. 20(b), before a payload is configured, a static header (or a static field in an SDSM) may be generated first, and data for detected objects may be sequentially queued and transmitted. In this case, information on a payload length and/or the number of objects may not be defined in the header, or an unlimited value (or a maximum value) may be configured or indicated. Thereafter, data for detected objects may be generated according to the above-described buffering conditions and may be sequentially transmitted after the static header. However, in order for the RX side to recognize that received data corresponds to data that is segmented and sequentially transmitted from the TX side (hereinafter, segment data), the segment data may further include a length and a streaming linkage code. Here, the streaming linkage code may include a start code, a linkage code, and an end of streaming (EoS) code.

As described above, the buffering and transmission method of FIG. 20(b) has an advantage in that data or a message may be transmitted based on a network environment and/or a reception or output buffering environment, rather than a conventional message-based encapsulation form. That is, the transmitting device may transmit a message or data by configuring a boundary or a unit based on a byte sequence itself, rather than performing buffering or transmission based on a boundary or a unit of a data or message. In this case, the present disclosure may significantly reduce transmission delay of a message while minimizing buffering operations for message transmission. For example, in terms of latency, data packets may be received at the receiving device or the receiver more quickly, thereby enabling faster presentation. For example, for an SDSM, when an RSU located at a static location performs object detection and transmits detected object data, the RSU may generate data in a form in which byte sequences corresponding to a predetermined portion are substantially unchanged, and may subsequently configure a payload for objects detected thereafter. In other words, the RSU may first generate or transmit static data (a header) in which changes rarely occur, such as information of a transmitting or detecting entity, and may sequentially transmit object data satisfying the above-described buffering condition 1 and/or buffering condition 2, in a segmented manner. That is, a payload for existing object information may be divided into a plurality of data segments according to buffering condition 1 and/or buffering condition 2, and may be sequentially transmitted.

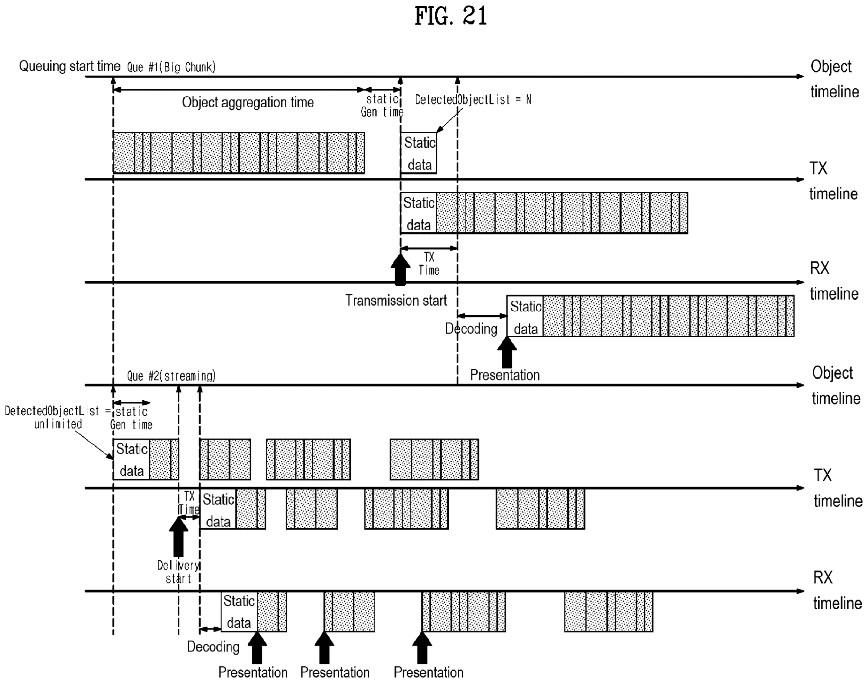

Referring to FIG. 21, a degree of latency is compared between a case in which an SDSM is transmitted according to the related art (conventional buffer model, general aggregation mode, Que#1) and a case in which an SDSM is transmitted based on a proposed buffer model (proposed buffer model, fast latency mode, Que#2). Based on the same timeline, an object timeline may represent a time for aggregation of objects (for example, a time until detection of objects is completed from sensing data such as acquired images), and a Tx timeline may represent a delivery or transmission timeline of data packets. An RX (client) timeline may represent a time at which decoding and presentation of received data are performed at the receiver or client.

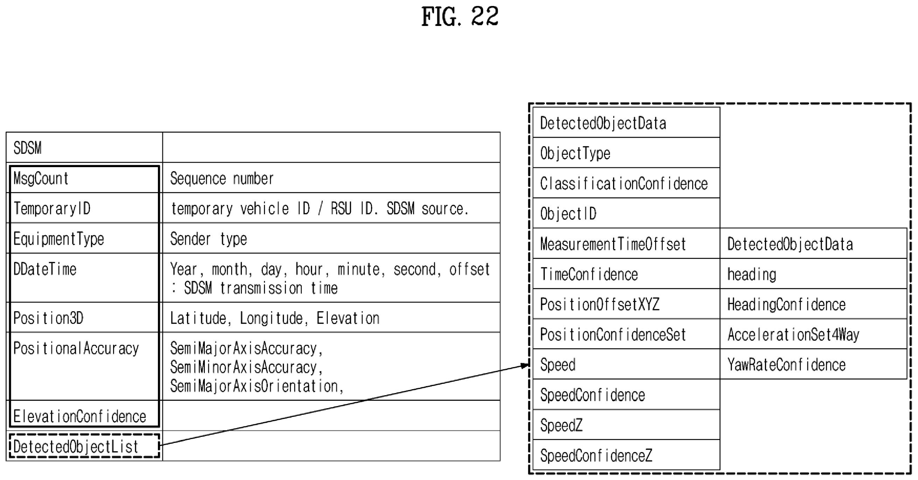

Referring to FIG. 22, in a conventional Que#1 method (hereinafter, a conventional buffer model), a DetectedObjectCount value is set to N, and N objects may be aggregated during an object aggregation time. When the aggregation of the N objects is completed, the transmitting device may generate static data (for example, from a MsgCount field to a field preceding a DetectedObjectList field in an SDSM, or from a MsgCount field to an ElevationConfidence field in the SDSM illustrated in FIG. 22). The transmitting device may transmit the SDSM in which object information for the N objects is added after the static data. That is, the transmitting device based on the conventional buffer model may perform buffering and queuing operations for the SDSM in a conventional manner in which object data for N objects is configured or generated and a header for static data is added. A completed data packet or the SDSM is transmitted during a TX timeline, and the receiving device may provide the data to a user at a presentation time point of an RX timeline.

In contrast, in a Que#2 method (hereinafter, a proposed buffer model), a value of a DetectedObjectCount field may be set to an arbitrary value or a predefined value. The transmitting device based on the proposed buffer model may generate static data (for example, from a MsgCount field to a field preceding a DetectedObjectList field in an SDSM, or from a MsgCount field to an ElevationConfidence field in the SDSM illustrated in FIG. 22). In addition, the transmitting device based on the proposed buffer model may queue data for an object that is generated or output regardless of the above-described aggregation time, based on a byte sequence. As illustrated in FIG. 21, when object data buffered in a buffer satisfies buffering condition 1 or buffering condition 2 described above, the transmitting device based on the proposed buffer model may transmit data or a message for an object buffered in the buffer. The transmitting device based on the proposed buffer model may empty the buffer after transmission of the data or the message, buffer object information for a newly detected object again in the buffer, and transmit data or a message for the object buffered in the buffer again when buffering condition 1 or buffering condition 2 described above is satisfied. By sequentially transmitting data or messages as described above, the transmitting device based on the proposed buffer model may transmit all object information for N objects. In this case, the data or messages transmitted by the transmitting device based on the proposed buffer model may be presented at the receiving device through a short delivery time and a short decoding time. When the conventional buffer model (Que#1) and the proposed buffer model (Que#2) are compared, since the presentation time of the proposed buffer model (Que#2) is significantly earlier than the presentation time of the related buffer model (Que#1), the receiving device may recognize and process the data or messages more quickly. The proposed buffer model (Que#2) has a technical effect of providing a message or data capable of sufficiently satisfying a safety guarantee requirement, which is a core requirement of a traffic safety service.

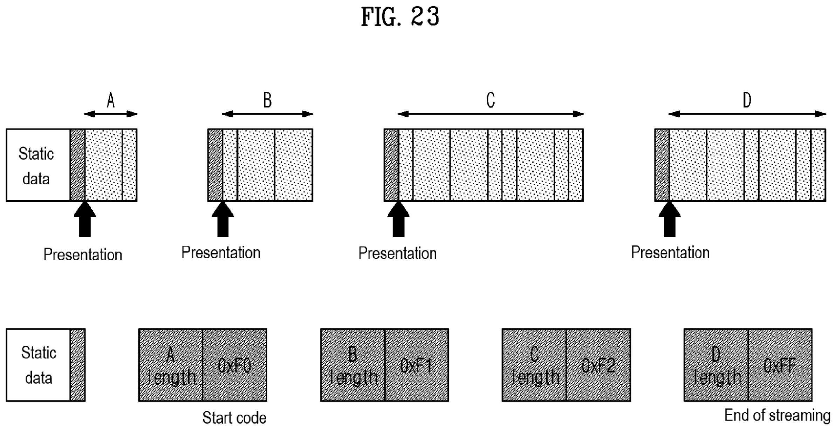

FIG. 23 is a diagram for explaining a method of streaming a message based on the proposed buffer model.

Referring to FIG. 23, the transmitting device may stream an SDSM by applying the proposed buffer model (Que#2). The proposed buffer model may be applied to determining under which conditions a data buffer is output and how queued data is aggregated. In this case, the transmitting device may queue object information for detected objects in a buffer at a buffering period determined based on a TCP RTT and/or an object detection time for transmission of the object information. As described above, since the object information is buffered and transmitted based on boundaries of byte sequences rather than boundaries of messages, the transmitting device based on the proposed buffer model may require additional linkage information and length information to be additionally added to data or a message. The linkage information and the length information may be included in a portion separately indicated in FIG. 23.

Here, static data may include fields from a MsgCount field to a field preceding a DetectedObjectList field of an SDSM illustrated in FIG. 22. A value of a DetectedObjectCount field in the static data may be defined or set to a maximum value (255) or an agreed unlimited value. To apply the proposed buffer model (Que#2), the static data and delimiters obtained by segmenting data into predetermined byte sequences may be transmitted with a two-byte data sequence (a type of header). In this case, the boundary of a delimiter may correspond to the boundary of data for object information or may correspond to the boundary of an arbitrary byte sequence. For each transmitted data, at least one of a byte-sequence length (1 byte), a start code of 0xF0, a linkage code (0xF1, 0xF2, ..., 0xFN), or an EoS code of 0xFF may be added. Through such delimiters, lengths, start codes, linkage codes, and end codes, a streaming method of the proposed buffer model (Que#2) may be effectively applied or supported.

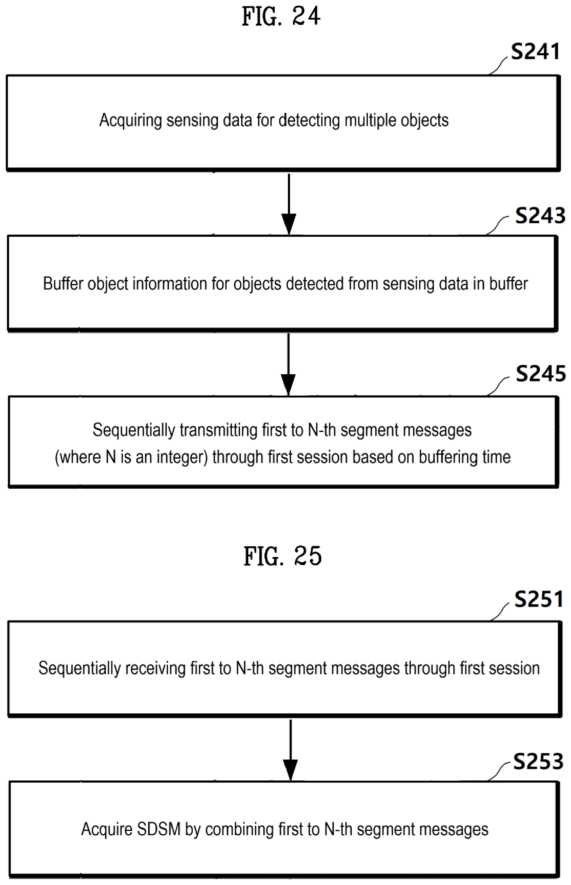

FIG. 24 is a diagram for explaining a method in which a first device transmits a message including object information.

The first device may provide messages including object information for a plurality of objects to a second device through a first session, based on the above-described proposed buffer model. The first device may be an RSU or a UE (or a client) that transmits and receives a message for a SoftV2X service using a Uu interface, and the second device may be a network (or a broker) or another client. As described above, the first session may be a TCP-based connection for transmitting an MQTT-based message. For example, the first device may establish the first session based on TCP for transmitting an MQTT-based message with the second device (the network or the broker).

Specifically, referring to FIG. 24, the first device may acquire sensing data for detecting the plurality of objects (S241). The sensing data may be data acquired for a surrounding environment through sensors such as a camera, a radar, or a lidar, and the first device may detect or sense object information for objects located in the surroundings through the sensing data.

Next, the first device may buffer the object information for the objects detected from the sensing data in a buffer (S243). The first device may buffer the object information sequentially detected from the sensing data in the buffer for a predetermined time duration. For example, when the sensing data corresponds to an image of a specific geographic area, the first device may divide the image into a plurality of regions, sequentially generate or output object information for each region, and buffer the generated or output object information in the buffer.

Thereafter, the first device may sequentially transmit first to N-th segment messages (where N is an integer) through the first session based on a buffering time during which the detected object information is buffered in the buffer (S245). Specifically, based on buffering condition 1 described above, when the buffering time for the buffer is equal to or greater than a first threshold time, the first device may first transmit a first segment message including object information buffered in the buffer during the first threshold time. As described above, the first device may determine the first threshold time based on an RTT measured for the first session. Specifically, the first device may transmit a message related to RTT measurement to the second device, receive a response message from the second device, and measure or calculate the RTT associated with the first session by calculating a difference between a transmission time of the message and a reception time of the response message. For example, the first threshold time may be determined as an average value of RTTs measured for the first session over a predetermined time duration. Alternatively, the first threshold time may be determined by further considering buffering condition 2 described above. For example, the first device may determine the first threshold time based on the RTT and an object detection time at which object information detected from the sensing data is generated or output. For example, the first device may determine a larger value between the RTT and the object detection time as the first threshold time.

For example, the first segment message may include object information for at least one object (for example, first partial object information) buffered in the buffer during the first threshold time, from overall object information for a predefined number of objects to be provided to the second device. That is, even when detection of the plurality of objects from the sensing data is not completed (or even when the predefined number of objects for transmission of an SDSM is not detected), if the first threshold time elapses, the first device may preferentially transmit, as a segment for configuring the SDSM, the first segment message including first object information (or the first partial object information) that corresponds to object information buffered during the first threshold time. Next, after transmitting the first segment message including the first object information, the first device may transmit a second segment message including second object information for objects buffered in the first buffer during the first threshold time (or during a second threshold time different from the first threshold time). After transmitting the second segment message, the first device may transmit a third segment message including third object information for objects buffered in the buffer during the first threshold time. In this way, the first device may sequentially transmit the first to N-th segment messages based on the buffering time during which data is buffered in the buffer and the first threshold time. By sequentially transmitting the first to N-th segment messages, the first device may provide, to the second device, overall object information for the plurality of objects detected from the sensing data.

Alternatively, each of the first segment message to the N-th segment message may be a segment of a single SDSM defined to include object information for the predetermined number of objects. That is, the first device may provide, to the second device, object information corresponding to the SDSM through the first segment message to the N-th segment message. Meanwhile, to identify a linkage relationship among the first segment message to the N-th segment message, each of the first segment message to the N-th segment message may include at least one of a predefined start code, a linkage code, or an end code, as described above.

Alternatively, among the first segment message to the N-th segment message, the first segment message transmitted first may include static data defined for the SDSM (for example, fields from a MsgCount field to a field preceding a DetectedObjectList field of the SDSM, or from a MsgCount field to an ElevationConfidence field of the SDSM illustrated in FIG. 22). For example, the static data defined for the SDSM (for example, fields from a MsgCount field to a field preceding a DetectedObjectList field of the SDSM, or from a MsgCount field to an ElevationConfidence field of the SDSM illustrated in FIG. 22) may be included only in the first segment message and may not be included in the remaining segment messages. Meanwhile, a value of DetectedObjectCount included in the static data of the first segment message may be set to a predefined value (or a maximum value) or an arbitrary value regardless of the number of a plurality of objects detectable from the sensing data.

FIG. 25 is a diagram for explaining a method in which a second device receives a message including object information from a first device.

Referring to FIG. 25, the second device may sequentially receive first to N-th segment messages including partial object information from the first device through a first session (S251). As described above, even when the second device does not receive up to the N-th segment message, the second device may preferentially perform decoding for the first segment message. As described with reference to FIG. 24, the partial object information may be object information for at least one object buffered in a buffer of the first device for a first threshold time, from object information for a plurality of objects included in an SDSM. In addition, the first threshold time may be determined by the first device based on an RTT associated with the first session.

Next, the second device may combine the first segment message to the N-th segment message to acquire the SDSM. For example, as described above, each of the first segment message to the N-th segment message may include at least one of a predefined start code, a linkage code, or an end code (see FIG. 23). The second device may combine or connect the first segment message to the N-th segment message based on codes included in the received segment messages, thereby acquiring the SDSM.

As described above, the present disclosure may significantly improve reliability of message operation for a V2X service by enabling rapid transmission of a message through the proposed buffer model, thereby greatly enhancing reliability of data transmitted through the message. That is, according to the present disclosure, implementation of an appropriate buffer model and a transmission method may enhance reliability of message operation for interaction among objects for a V2X service, and a message for the V2X service may be delivered within a validity time or a required delay time without loss of data packets, thereby improving reliability of data included in the message.

The present disclosure may minimize latency and latency variation occurring in a V2X service requiring real-time communication by transmitting a message according to the proposed buffer model. That is, the present disclosure may support a low-latency communication environment suitable for real-time communication through rapid transmission of a message based on the proposed buffer model. For example, in a real-time communication environment such as a V2X service, rapid transmission of data may be required. In this case, the present disclosure may minimize latency and latency variation required for real-time communication by transmitting a message according to the proposed buffer model, and may effectively support rapid data transmission and interaction through the message. Alternatively, the present disclosure may maximize utilization of bandwidth for providing a V2X service through efficient buffer management and data flow control, thereby improving efficiency of network resources.

Accordingly, the present disclosure may play an important role in improving reliability and efficiency of data transmission in a V2X service (or a SoftV2X service) requiring a real-time communication environment. That is, through an efficient buffer model and a transmission method, the present disclosure may optimize network performance and provide a smooth and reliable V2X operation system to a user.

### Communication system example to which the present disclosure is applied

Although not limited thereto, various descriptions, functions, procedures, proposals, methods, and/or operational flow charts of the present disclosure disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

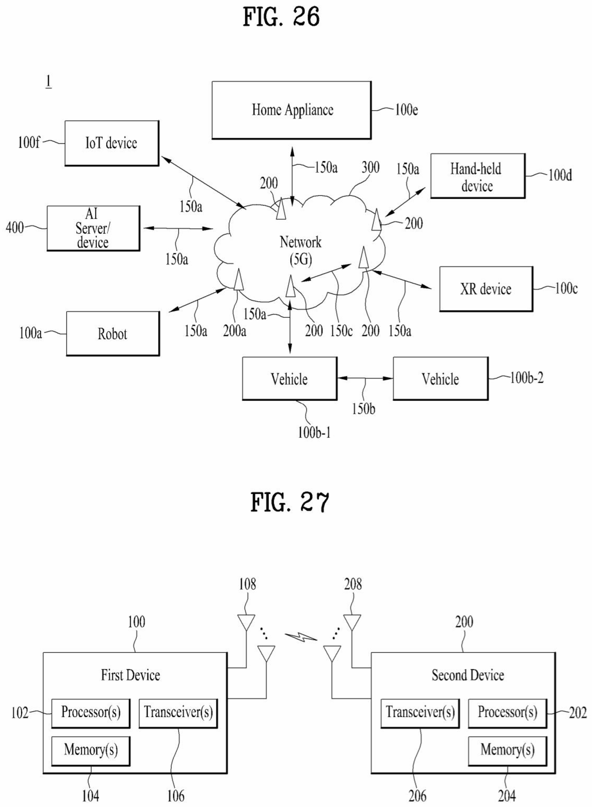

FIG. 26 illustrates a communication system applied to the present disclosure.

Referring to FIG. 26, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

### Examples of wireless devices to which the present disclosure is applied

FIG. 27 illustrates a wireless device applicable to the present disclosure.

Referring to FIG. 27, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 26.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information acquired by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The first wireless device 100 or a first device may include the processor(s) 102, the memory(s) 104, and the transceiver(s) 106. The memory(s) 104 may include at least one program capable of performing operations related to the embodiments described with reference to FIGS. 16 to 25.

Specifically, the processor(s) 102 may control the transceiver(s) 106 to acquire sensing data for detecting a plurality of objects, buffer object information for objects detected from the sensing data in a buffer, and transmit a first segment message including partial object information for at least one object buffered in the buffer during a first threshold time among the plurality of objects to a second device through a first session. Here, the first threshold time may be determined based on an RTT associated with the first session.

Alternatively, a processing apparatus including the processor(s) 102 and the memory(s) 104 and configured to control a first device transmitting a message including object information may be configured. In this case, the processing apparatus may include at least one processor; and at least one memory connected to the at least one processor and storing instructions that, when executed by the at least one processor, cause the first device to acquire sensing data for detecting a plurality of objects, buffer object information for objects detected from the sensing data in a buffer, and transmit a first segment message including partial object information for at least one object buffered in the buffer during a first threshold time among the plurality of objects to a second device through a first session. Here, the first threshold time may be determined based on an RTT associated with the first session.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information acquired by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

The second wireless device 200 or a second device may include the processor(s) 202, the memory(s) 204, and the transceiver(s) 206. The memory(s) 204 may include at least one program capable of performing operations related to the embodiments described with reference to FIGS. 16 to 25.

Specifically, the processor(s) 202 may control the transceiver(s) 206 to sequentially receive a first segment message to an N-th segment message including partial object information from a first device through a first session, and acquire an SDSM by combining the first segment message to the N-th segment message. Here, the partial object information is object information for at least one object buffered in a buffer of the first device during a first threshold time, from object information for a plurality of objects included in the SDSM. The first threshold time may be determined based on an RTT associated with the first session.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

### Examples of wireless devices to which the present disclosure is applied

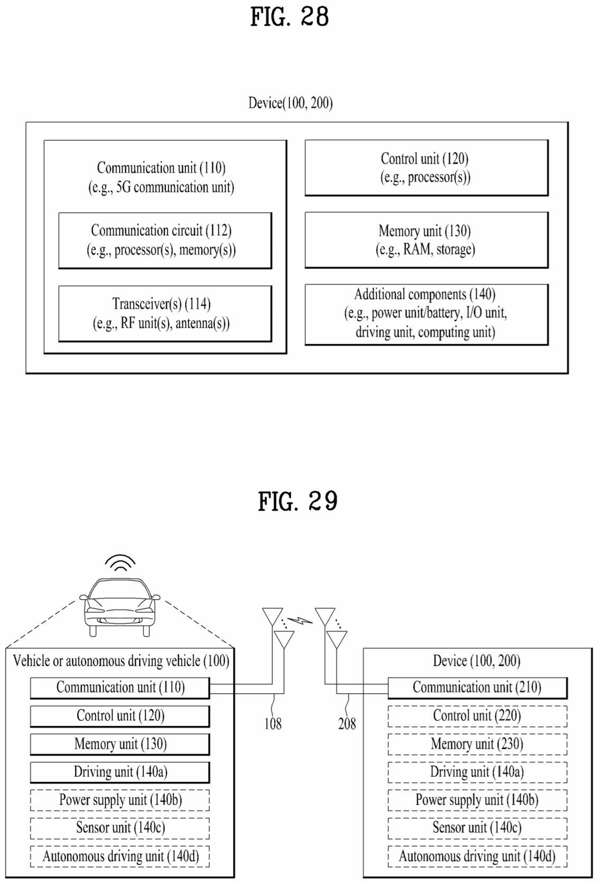

FIG. 28 illustrates another example of a wireless device applied to the present disclosure. The wireless device may be implemented in various forms according to a use-case/service (refer to FIG. 26)

Referring to FIG. 28, wireless devices 100 and 200 may correspond to the wireless devices 100 and 200 of FIG. 27 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 27. For example, the transceiver(s) 114 may include the one or more transceivers 106 and 206 and/or the one or more antennas 108 and 208 of FIG. 27. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 26), the vehicles (100b-1 and 100b-2 of FIG. 26), the XR device (100c of FIG. 26), the hand-held device (100d of FIG. 26), the home appliance (100e of FIG. 26), the IoT device (100f of FIG. 26), a digital broadcast terminal, a hologram device, a public safety device, an MTC device, a medicine device, a fintech device (or a finance device), a security device, a climate/environment device, the AI server/device (400 of FIG. 26), the BSs (200 of FIG. 26), a network node, etc. The wireless device may be used in a mobile or fixed place according to a use-example/service.

In FIG. 28, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

### Examples of vehicles or autonomous vehicles to which the present disclosure is applied

FIG. 29 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 29, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 26, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). Also, the driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultra-acoustic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the acquired data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly acquired data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

Here, wireless communication technologies implemented in the wireless devices (XXX, YYY) of the present specification may include LTE, NR, and 6G, as well as Narrowband Internet of Things for low power communication. At this time, for example, the NB-IoT technology may be an example of a Low Power Wide Area Network (LPWAN) technology and may be implemented in standards such as LTE Cat NB1 and/or LTE Cat NB2 and is not limited to the above-described names. Additionally or alternatively, the wireless communication technology implemented in the wireless devices (XXX, YYY) of the present specification may perform communication based on LTE-M technology. In this case, as an example, the LTE-M technology may be an example of LPWAN technology and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (XXX, YYY) of the present specification is at least one of ZigBee, Bluetooth, and Low Power Wide Area Network (LPWAN) considering low power communication and is not limited to the above-described names. As an example, ZigBee technology can generate personal area networks (PANs) related to small/low-power digital communication based on various standards such as IEEE 802.15.4 and may be called various names.

The embodiments described above are those in which components and features of the present disclosure are combined in a predetermined form. Each component or feature should be considered optional unless explicitly stated otherwise. Each component or feature may be implemented in a form that is not combined with other components or features. In addition, it is also possible to constitute an embodiment of the present disclosure by combining some components and/or features. The order of operations described in the embodiments of the present disclosure may be changed. Some configurations or features of one embodiment may be included in other embodiments or may be replaced with corresponding configurations or features of other embodiments. It is obvious that the embodiments may be configured by combining claims that do not have an explicit citation relationship in the claims or may be included as new claims by amendment after filing.

In this document, embodiments of the present disclosure have been mainly described based on a signal transmission/reception relationship between a terminal and a base station. Such a transmission/reception relationship is extended in the same/similar manner to signal transmission/reception between a terminal and a relay or a base station and a relay. A specific operation described as being performed by a base station in this document may be performed by its upper node in some cases. That is, it is obvious that various operations performed for communication with a terminal in a network comprising a plurality of network nodes including a base station may be performed by the base station or network nodes other than the base station. The base station may be replaced by terms such as a fixed station, a Node B, an eNode B (eNB), an access point, and the like. In addition, the terminal may be replaced with terms such as User Equipment (UE), Mobile Station (MS), and Mobile Subscriber Station (MSS).

In a hardware configuration, the embodiments of the present disclosure may be achieved by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, a method according to embodiments of the present disclosure may be implemented in the form of a module, a procedure, a function, etc. Software code may be stored in a memory unit and executed by a processor. The memory unit is located at the interior or exterior of the processor and may transmit and receive data to and from the processor via various known means

As described before, a detailed description has been given of preferred embodiments of the present disclosure so that those skilled in the art may implement and perform the present disclosure. While reference has been made above to the preferred embodiments of the present disclosure, those skilled in the art will understand that various modifications and alterations may be made to the present disclosure within the scope of the present disclosure. For example, those skilled in the art may use the components described in the foregoing embodiments in combination. The above embodiments are therefore to be construed in all aspects as illustrative and not restrictive. The scope of the present disclosure should be determined by the appended claims and their legal equivalents, not by the above description, and all changes coming within the meaning and equivalency range of the appended claims are intended to be embraced therein.

### INDUSTRIAL APPLICABILITY

The above-described embodiments of the present disclosure are applicable to various mobile communication systems.

## Claims

1. A method of transmitting, by a first device, a message including object information in a wireless communication system, the method comprising:
acquiring sensing data for detecting a plurality of objects;
buffering object information detected from the sensing data in a buffer; and
transmitting a first segment message including partial object information for at least one object buffered in the buffer during a first threshold time among the plurality of objects to a second device through a first session,
wherein the first threshold time is determined based on a round trip time (RTT) associated with the first session.

2. The method of claim 1, wherein the first threshold time is determined as an average value of the RTT associated with the first session.

3. The method of claim 1, wherein the first device provides, to the second device, the object information for the plurality of objects through the first segment message to an N-th segment message that are sequentially transmitted based on a buffering time.

4. The method of claim 3, wherein the first segment message to the N-th segment message are segments of a single sensor data sharing message (SDSM).

5. The method of claim 4, wherein static data defined for the SDSM is included only in the first segment message that is transmitted first among the first segment message to the N-th segment message.

6. The method of claim 5, wherein a value of DetectedObjectCount of the static data is set to an arbitrary value or a maximum value regardless of a number of the plurality of objects.

7. The method of claim 1, wherein the first segment message further includes at least one of a start code, a linkage code, or an end code.

8. The method of claim 1, wherein the first threshold time is determined by further considering an object detection time at which the object information detected from the sensing data is generated.

9. A computer-readable recording medium having recorded thereon a program for executing the method of claim 1.

10. A first device configured to transmit a message including object information in a wireless communication system, the first device comprising:
a radio frequency (RF) transceiver; and
a processor connected to the RF transceiver,
wherein the processor is configured to:
control the RF transceiver to acquire sensing data for detecting a plurality of objects;
buffer object information for objects detected from the sensing data in a buffer; and
transmit a first segment message including partial object information for at least one object buffered in the buffer during a first threshold time among the plurality of objects to a second device through a first session, and
wherein the first threshold time is determined based on a round trip time (RTT) associated with the first session.

11. A processing apparatus configured to control a first device transmitting a message including object information in a wireless communication system, the processing apparatus comprising:
at least one processor; and
at least one memory connected to the at least one processor and storing instructions that, when executed by the at least one processor, cause the first device to:
acquire sensing data for detecting a plurality of objects;
buffer object information for objects detected from the sensing data in a buffer; and
transmit a first segment message including partial object information for at least one object buffered in the buffer during a first threshold time among the plurality of objects , to a second device through a first session,
wherein the first threshold time is determined based on a round trip time (RTT) associated with the first session.

12. A method of receiving, by a second device, a message including object information in a wireless communication system, the method comprising:
sequentially receiving a first segment message to an N-th segment message including partial object information from a first device through a first session; and
acquiring a sensor data sharing message (SDSM) by combining the first segment message to the N-th segment message,
wherein the partial object information is object information for at least one object buffered in a buffer of the first device during a first threshold time, from object information for a plurality of objects included in the SDSM, and
wherein the first threshold time is determined based on a round trip time (RTT) associated with the first session.

13. A computer-readable recording medium having recorded thereon a program for executing the method of claim 12.

14. A second device configured to receive a message including object information in a wireless communication system, the second device comprising:
a radio frequency (RF) transceiver; and
a processor connected to the RF transceiver,
wherein the processor is configured to:
control the RF transceiver to sequentially receive a first segment message to an N-th segment message including partial object information from a first device through a first session; and
acquire a sensor data sharing message (SDSM) by combining the first segment message to the N-th segment message,
wherein the partial object information is object information for at least one object buffered in a buffer of the first device during a first threshold time, from object information for a plurality of objects included in the SDSM, and
wherein the first threshold time is determined based on a round trip time (RTT) associated with the first session.

15. A processing apparatus configured to control a second device receiving a message including object information in a wireless communication system, the processing apparatus comprising:
at least one processor; and
at least one memory connected to the at least one processor and storing instructions that, when executed by the at least one processor, cause the second device to:
sequentially receive a first segment message to an N-th segment message including partial object information from a first device through a first session, and acquire a sensor data sharing message (SDSM) by combining the first segment message to the N-th segment message,
wherein the partial object information is object information for at least one object buffered in a buffer of the first device during a first threshold time, from object information for a plurality of objects included in the SDSM, and
wherein the first threshold time is determined based on a round trip time (RTT) associated with the first session.
